# EUROPEAN PATENT APPLICATION

(11) **EP 4 822 878 A1**
(43) Date of publication of application: **14.10.2026**
(21) Application number: 25869624.4
(22) Date of filing: 09.10.2025
(51) Int. Cl.: H01M 50/533

(54) **BATTERY CELL**

(30) Priority: 22.12.2024 CN 202411901869
(71) Applicant: HUIZHOU EVE POWER CO., LTD., Huizhou, Guangdong 516039 (CN); Eve Power Co., Ltd., Jingmen, Hubei 448000 (CN)
(72) Inventor: ZHAO, Fenfen, Huizhou, Guangdong 516000 (CN); XU, Yuebin, Huizhou, Guangdong 516000 (CN); YAN, Bo, Huizhou, Guangdong 516000 (CN); CHEN, Pandong, Huizhou, Guangdong 516000 (CN); SHU, Kuanjin, Huizhou, Guangdong 516000 (CN); LIU, Jincheng, Huizhou, Guangdong 516000 (CN)
(74) Representative: Zhu, Puxing
(86) International application number: PCT/CN2025/126571
(87) International publication number: WO 2026/129811

(57) **Abstract**

The present application discloses a single cell. The single cell includes a first conductive member, a second conductive member, and a cell assembly. Specifically, the first conductive member is provided with a conductive hole, and the conductive hole penetrates through the first conductive member in a thickness direction of the first conductive member. The second conductive member passes through the conductive hole. The second conductive member is fixed and electrically connected to the first conductive member. The cell assembly is welded to the second conductive member.

## Description

The present application claims priority to Chinese Patent Application No. 202411901869.3 filed with the Chinese Patent Office on December 22, 2024. The disclosure of which is incorporated herein by reference in its entirety.

### TECHNICAL FIELD

The present application relates to the field of battery technologies, and in particular, to a single cell.

### BACKGROUND

A current collecting disk is an important component of a battery and undertakes a function of collecting and converging a current of a cell. As another important component of the battery, an outer casing undertakes a function of sealing and protecting internal structures of the battery. Due to their different functions, the current collecting disk and the outer casing are usually made of different materials. One common configuration is a current collecting disk made of copper paired with an outer casing made of aluminum alloy.

### SUMMARY

### TECHNICAL PROBLEM

In related art, due to significant differences in melting points and fluidity between the current collecting disk and the outer casing, certain obstacles exist when the current collecting disk and the outer casing are welded, which easily lead to incomplete penetration on one side or overburning on another side. This affects the electrical performance and service life of the battery.

Therefore, there is an urgent need for a single cell to solve the above-described deficiencies.

### TECHNICAL SOLUTIONS

The present application provides a single cell. The single cell includes a first conductive member, a second conductive member, and a cell assembly. Specifically, the first conductive member is provided with a conductive hole. The conductive hole penetrates through the first conductive member in a thickness direction of the first conductive member. The second conductive member passes through the conductive hole. The second conductive member is fixed and electrically connected to the first conductive member. The cell assembly is welded to the second conductive member.

### BENEFICIAL EFFECTS

Beneficial effects of the present application are as follows.

The second conductive member passes through the conductive hole in the first conductive member. The second conductive member and the first conductive member are physically connected and conductive to each other. The second conductive member is welded to the cell assembly. Compared with related art, the second conductive member of the present application is less limited by structural strength in terms of material selection. As such, the first conductive member and the second conductive member of the present application can be configured to be made of different materials. For example, the first conductive member is configured as an aluminum alloy structure commonly used in a top cover assembly in the related art, so as to ensure a strength of an outer casing of the single cell. The second conductive member is configured to be made of a same material as a current collecting disk of the cell assembly, so that welding of the second conductive member and the current collecting disk of the cell assembly is homogeneous welding, and a welding seam has better quality.

### BRIEF DESCRIPTION OF THE DRAWINGS

FIG. 1 is a schematic view of an overall structure of a single cell according to an embodiment of the present application.
FIG. 2 is an overall cross-sectional view of a single cell according to an embodiment of the present application.
FIG. 3 is a partial enlarged view of a region A in FIG. 2.
FIG. 4 is a schematic view of matching between a second conductive member and a cell assembly according to another embodiment of the present application.
FIG. 5 is a schematic view of matching between a second conductive member and a first isolation layer according to an embodiment of the present application.
FIG. 6 is a schematic view of matching between a first conductive member and a second conductive member according to an embodiment of the present application.
FIG. 7 is a schematic view of matching between a first conductive member, a second conductive member, and a first isolation sleeve according to another embodiment of the present application.
FIG. 8 is an overall cross-sectional view of a single cell according to another embodiment of the present application.
FIG. 9 is a partial enlarged view of a region B in FIG. 8.
FIG. 10 is a partial enlarged view of a region C in FIG. 9.
FIG. 11 is a schematic view of matching between a first conductive member, a second conductive member, and a fastener according to another embodiment of the present application.
FIG. 12 is a schematic view of matching between a first conductive member, a second conductive member, and a fastener according to another embodiment of the present application.
FIG. 13 is a schematic view of matching between a first conductive member, a second conductive member, a fastener, and a second isolation sleeve according to another embodiment of the present application.
FIG. 14 is a schematic view of matching between a first conductive member, a second conductive member, a fastener, and a second isolation sleeve according to another embodiment of the present application.
FIG. 15 is an overall cross-sectional view of a single cell according to another embodiment of the present application.
FIG. 16 is a partial enlarged view of a region D in FIG. 15.
FIG. 17 is a schematic view of matching between a first conductive member and a second conductive member according to another embodiment of the present application.
FIG. 18 is a schematic view of matching between a first conductive member, a second conductive member, and a second isolation sleeve according to another embodiment of the present application.
FIG. 19 is a schematic view of matching between a first conductive member, a second conductive member, and a second isolation sleeve according to another embodiment of the present application.
FIG. 20 is a partial enlarged view of a region E in FIG. 2.
FIG. 21 is a schematic view of matching between a pressure relief groove and a second conductive member according to another embodiment of the present application.
FIG. 22 is a schematic view of matching between a pressure relief groove and a second conductive member according to another embodiment of the present application.
FIG. 23 is a schematic view of matching between a first conductive member, a second conductive member, and a fourth isolation layer according to an embodiment of the present application.
FIG. 24 is a schematic view of matching between a first conductive member, a second conductive member, and a fourth isolation layer according to another embodiment of the present application.
FIG. 25 is a schematic view of a connection relationship between a first conductive member and a casing according to an embodiment of the present application.

In the figures:
10, first conductive member; 11, plate body; 111, conductive hole; 112, second hole; 113, third hole; 114, pressure relief groove; 12, boss; 13, first plate; 14, second plate; 15, third plate; 20, second conductive member; 21, welding hole; 22, rivet post; 23, rivet base; 24, rivet buckle; 241, outer chamfer; 242, riveting hole; 243, inner chamfer; 25, through post; 26, flange; 261, first hole; 27, connecting rod; 28, base; 29, snap; 30, cell assembly; 31, cell; 311, jelly roll; 312, tab; 32, current collecting disk; 41, first welding seam; 42, second welding seam; 51, first isolation layer; 52, second isolation layer; 53, third isolation layer; 54, fourth isolation layer; 55, first isolation sleeve; 56, second isolation sleeve; 561, ring sleeve portion; 562, gasket portion; 60, fastener; 61, first portion; 62, second portion; 70, casing; 80, assembly gap.

### DETAILED DESCRIPTION

In order to alleviate a case where welding parameters between an outer casing of a single cell and a cell assembly are complex and quality of a welding seam is poor, embodiments of the present application provide a single cell. The single cell includes a first conductive member 10, a second conductive member 20, and a cell assembly 30.

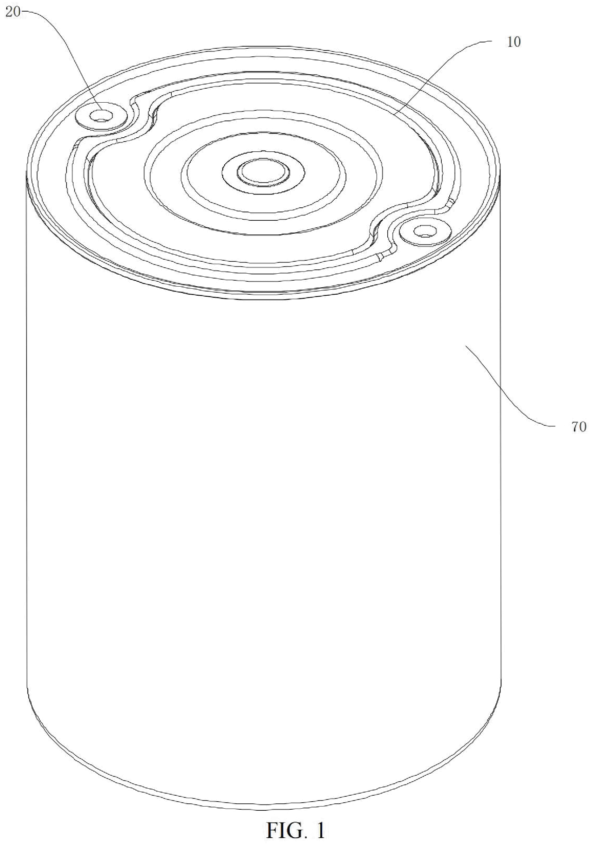

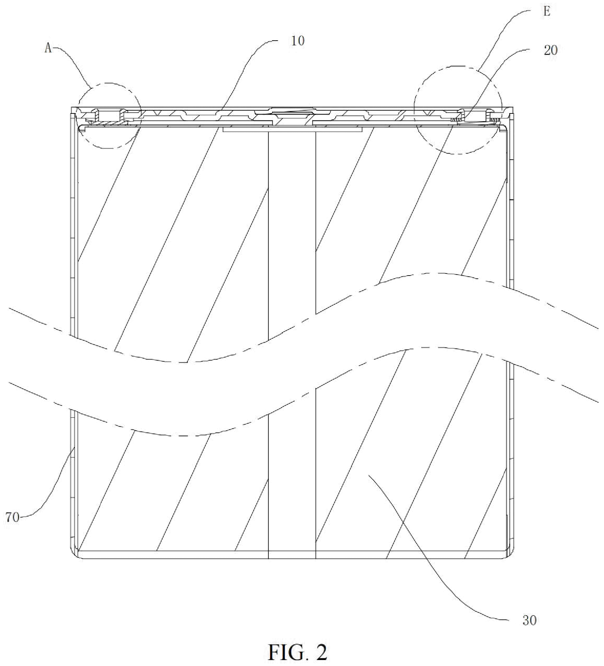

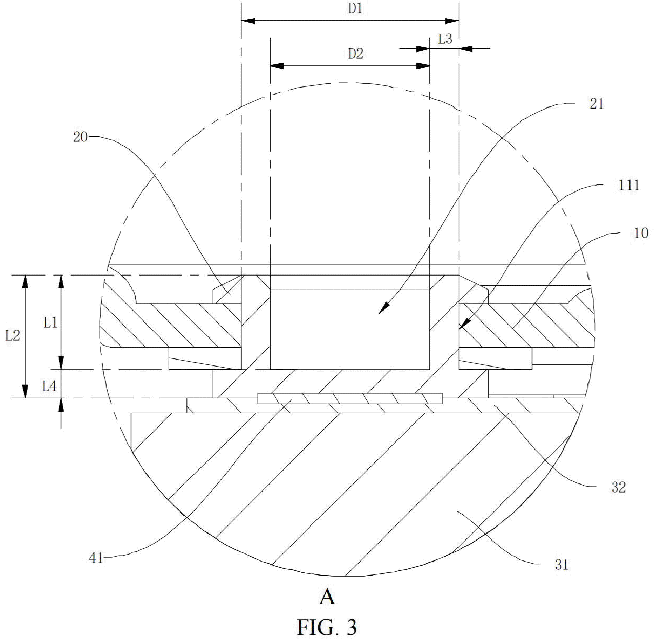

Referring to FIG. 1 to FIG. 3, FIG. 1 is a schematic view of an overall structure of a single cell according to an embodiment of the present application. FIG. 2 is an overall cross-sectional view of a single cell according to an embodiment of the present application. FIG. 3 is a partial enlarged view of a region A in FIG. 2. The above accompanying drawings collectively show a matching relationship between the first conductive member 10, the second conductive member 20, and a cell 31.

Specifically, the first conductive member 10 is provided with a conductive hole 111. The conductive hole 111 penetrates through the first conductive member 10 in a thickness direction of the first conductive member 10. The second conductive member 20 passes through the conductive hole 111. The second conductive member 20 and the first conductive member 10 are fixed and electrically connected to each other. The cell assembly 30 is welded to the second conductive member 20.

In this embodiment, the second conductive member 20 passes through the conductive hole 111. The first conductive member 10 and the second conductive member 20 are fixed and electrically connected to each other. Due to a separated design of the first conductive member 10 and the second conductive member 20, both can be configured with different materials according to requirements. Exemplarily, the second conductive member 20 is configured to be made of a same material as a region of the cell assembly 30 welded to the second conductive member 20, so that the performance of the welding seam between the second conductive member 20 and the cell assembly 30 is optimized. Furthermore, since an area proportion of the second conductive member 20 on the entire outer casing is relatively small, adjustments to the material of the second conductive member 20 have little impact on the structural performance of the outer casing of the single cell.

Compared with related art, since the second conductive member 20 can be configured as required to adapt to characteristics of the cell assembly 30, the single cell in this embodiment can significantly optimize weldability between the outer casing and the cell assembly 30 without significantly affecting a strength of the outer casing of the single cell. Dissimilar metals on two sides no longer need to be configured with complex welding parameters, so that both the strength and conductivity of the welding seam are improved, the production processes are simplified, the performance of the single cell is optimized, and the service life of the single cell is prolonged.

In some embodiments of the present application, the second conductive member 20 is further formed with a welding hole 21. An opening direction of the welding hole 21 faces a side of the second conductive member 20 away from the cell assembly 30.

For clarity of illustration, processing steps of the single cell are described herein. Generally, during processing processes of the single cell, a conductive region of the cell assembly 30 abuts against the outer casing from an inner side of the outer casing to realize welding of the outer casing and the cell assembly 30. Then, a welding gun is aligned with a corresponding region on an outer side of the outer casing, and a region where the conductive region of the cell assembly 30 abuts against the outer casing is burned and melted by means of applying voltage and high temperature, and the welding seam is formed after the melted metal is solidified.

Since during the welding process in the related art, the conductive region of the cell assembly 30 needs to be burned and melted through the outer casing, a thickness of the outer casing determines the power requirement and welding permeability of welding. In this embodiment, the second conductive member 20 is welded to the cell assembly 30, so that the smaller a distance between an outer surface and an inner surface of a welding region of the second conductive member 20, the easier the welding. The second conductive member 20 is provided with the welding hole 21, so that the welding gun can be closer to a region where the cell assembly 30 and the second conductive member 20 are connected to each other. On one hand, loss during an energy transmission process is reduced. On another hand, the second conductive member 20 is prevented from being over-burned during the welding process, so as to effectively ensure that the second conductive member 20 still maintains good electrical and mechanical properties after the welding is completed.

A diameter of the conductive hole 111 is D1, and a diameter of the welding hole 21 is D2, where 30%≤D2/D1≤90%.

The diameter of the welding hole 21 is limited by the diameter of the conductive hole 111. A larger welding hole 21 enables that a larger welding gun can be inserted into the welding hole 21 for the welding process step. However, in a case where a size of the conductive hole 111 is determined, if the welding hole 21 is excessively large, a wall thickness of the second conductive member 20 at a position where the welding hole 21 is provided is too thin, thereby affecting the strength and overcurrent capability of the second conductive member 20. A value of D2/D1 is selected to be within the range of 30%≤D2/D1≤90%, so that on the premise of ensuring the strength and overcurrent capability of the second conductive member 20, the welding hole 21 can be as easy as possible for the welding gun to penetrate.

In some possible implementations, a depth of the welding hole 21 is L1, and a projection length of the second conductive member 20 in the thickness direction of the first conductive member 10 is L2, where 50%≤L1/L2≤90%.

The depth of the welding hole 21 is limited by the second conductive member 20. If the welding hole 21 is excessively shallow, a welding current or heat energy needs to penetrate through a thicker bottom of the second conductive member 20, so that a crystal structure of the second conductive member 20 is destroyed while wasting energy. If the welding hole 21 is excessively deep, the bottom of the second conductive member 20 is excessively thin, resulting in a risk that during the welding process, the temperature rises too fast or the bottom of the second conductive member 20 is even burned through. A value of L1/L2 is selected within the range of 50%≤L1/L2≤90%, so that a thickness of the bottom of the second conductive member 20 is suitable for the welding process step.

It should be noted that the thickness direction mentioned in this embodiment cannot represent that a size of the first conductive member 10 in this direction is necessarily smaller than its diameter. The description here is that in most single cells, the thickness direction is unquestionably a direction where the first conductive member 10 is engaged with the casing 70. All dimensions involved below are described as a general description in the technical field without additional limitation, which does not mean that there is no special case, and the specific reference should be subject to the identification in the corresponding accompanying drawings.

In some possible implementations, a minimum distance between a hole wall of the welding hole 21 and an outer wall of the second conductive member 20 is L3, where L3≥0.05 mm.

Preferably, the welding hole 21 is arranged coaxially with the second conductive member 20. However, considering the processing accuracy and assembly avoidance, there are also application scenarios where the two are arranged eccentrically. L3 is limited to be greater than or equal to 0.05 mm, so that the distance between the hole wall of the welding hole 21 and the outer wall of the second conductive member 20 can be effectively prevented from being too close, and during subsequent use of the single cell, the second conductive member 20 is prevented from being broken down due to insufficient current-carrying capacity.

In some possible implementations, a distance between a bottom of the welding hole 21 and a surface of the second conductive member 20 on a side close to the cell assembly 30 is L4, where 0.05 mm≤L4≤2 mm.

A size of the second conductive member 20 changes with the capacity and design of the single cell. However, the thickness of the bottom of the second conductive member 20 for carrying the current and heat of welding, i.e., the distance between the bottom of the welding hole 21 and the surface of the second conductive member 20 on the side close to the cell assembly 30, is limited by the welding process and has a specific parameter range. Through calculation, it can be known that a value of L4 is within the range of 0.05 mm≤L4≤2 mm, so that on one hand, the bottom of the second conductive member 20 can be prevented from being burned through, and on another hand, the energy waste caused by an excessively thick bottom can also be prevented. This range is a better parameter configuration.

In some embodiments of the present application, the cell assembly 30 includes the cell 31 and a current collecting disk 32. The current collecting disk 32 is electrically connected to the cell 31 and the second conductive member 20, respectively.

The current collecting disk 32 can collect the current of the entire cell 31. The second conductive member 20 is welded to the current collecting disk 32. The current of the cell 31 is conducted to the first conductive member 10 through the current collecting disk 32 and the second conductive member 20. During the entire process of current transmission, a flow guiding effect of the originally largest resistance section is greatly optimized due to the welding between the second conductive member 20 and the current collecting disk 32, so that the energy efficiency of the single cell is improved.

An area of the first conductive member 10 on a side close to the cell assembly 30 is S1, and a projection area of a contact surface between the second conductive member 20 and the current collecting disk 32 on the first conductive member 10 is S2, where 20%≤S2/S1≤90%.

The larger a contact area between the second conductive member 20 and the current collecting disk 32, the stronger the conductivity therebetween. However, limited by an area of the current collecting disk 32, there is a limit to this positive correlation. 20%≤S2/S1≤90% is a value range where more intuitive performance optimization can be obtained from the increase in the areas of the current collecting disk 32 and the second conductive member 20.

It should be noted that the projection area herein refers to an area of a maximum pattern that can be enclosed by a projection of a structure on a corresponding plane. For the structure with holes inside, the projection area should be enclosed by an outer edge of a projection pattern.

In some possible implementations, the second conductive member 20 is connected to the current collecting disk 32 through a first welding seam 41. A projection area of the first welding seam 41 on a surface of the current collecting disk 32 is S3, and a surface area of the current collecting disk 32 on a side close to the first conductive member 10 structure is S4, where S3/S4≥10%.

The larger a proportion of the first welding seam 41, the more stable the connection between the current collecting disk 32 and the second conductive member 20. Especially in a technical solution where a position of the cell assembly 30 needs to be stabilized by the first welding seam 41, a cross-sectional area of the first welding seam 41 is directly related to whether the cell assembly 30 can maintain the connection with the second conductive member 20. S3/S4≥10% is a preferred value range for maintaining the connection relationship between the second conductive member 20 and the current collecting disk 32.

In some possible implementations, the second conductive member 20 is welded to a side of the current collecting disk 32 close to the first conductive member 10. A side of the current collecting disk 32 away from the second conductive member 20 is electrically connected to the cell 31.

Two sides of the current collecting disk 32 are electrically connected to the second conductive member 20 and the cell 31, respectively, so that the surface area of the current collecting disk 32 can be fully used as much as possible, thereby improving the overcurrent area and current-carrying capacity.

In some possible implementations, the second conductive member 20 and the current collecting disk 32 are made of a same material.

The second conductive member 20 and the current collecting disk 32 made of the same material have similar welding parameters and fluidity, and a homogeneous welding effect is better.

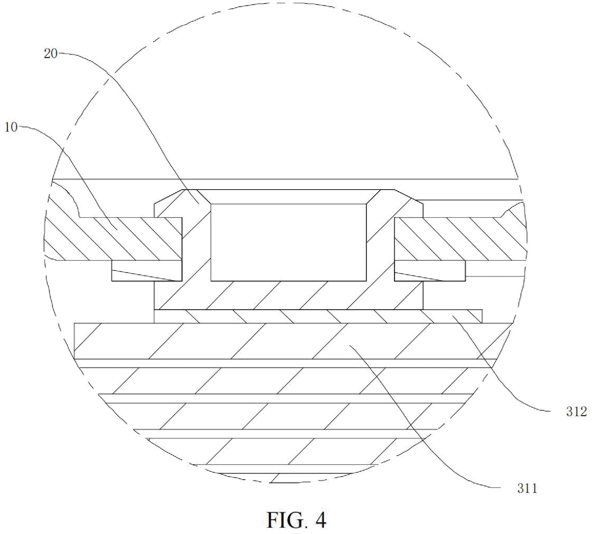

Referring to FIG. 4 together, FIG. 4 is a schematic view of matching between a second conductive member and a cell assembly according to another embodiment of the present application.

In some embodiments of the present application, the cell assembly 30 includes a jelly roll 311 and a tab 312 electrically connected to each other. The tab 312 is welded to the second conductive member 20.

This embodiment provides another technical solution. In some technical solutions where the current collecting disk 32 is not provided, the second conductive member 20 may also be directly electrically connected to the cell 31. Specifically, the cell 31 includes the jelly roll 311 and the tab 312, and the second conductive member 20 is welded to the tab 312.

The second conductive member 20 and the tab 312 are made of a same material.

Similar to the current collecting disk 32, the second conductive member 20 and the tab 312 made of the same material are similar in terms of welding parameters and fluidity, and the homogeneous welding effect is better.

In some embodiments of the present application, a plurality of conductive holes 111 are provided. The second conductive members 20 are arranged in a one-to-one correspondence with the plurality of conductive holes 111.

Current carrying regions can be dispersed by the plurality of conductive holes 111, so that in a case where a total overcurrent area remains unchanged, the current-carrying effect is better.

The plurality of conductive holes 111 are provided in the first conductive member 10 in a circumferential array.

On one hand, the conductive holes 111 arranged in the circumferential array enables that the current is distributed more uniformly, and the electrical performance of the single cell is optimized. On another hand, the conductive holes 111 arranged in the circumferential array may reduce damages to mechanical properties of the single cell as much as possible caused by the holes in the first conductive member 10.

In some embodiments of the present application, a material of the second conductive member 20 includes copper.

For the cell assembly 30 in the related art, regardless of a type where the tab 312 directly outputs to the outside or the type that outputs after being converged through the current collecting disk 32, a material of an output end of the cell assembly 30 is mostly made of copper. The material of the second conductive member 20 includes copper, so that a welding matching degree between the second conductive member 20 and the cell assembly 30 can be enhanced, the welding process is simplified, and the performance of the welding seam is optimized.

It should be noted that in this embodiment, the current collecting disk 32 and the tab 312 are described as the output end. In many cell assemblies 30, the current collecting disk 32 and the tab 312 both perform the function of current input. The description herein indicates that the current collecting disk 32 and the tab 312 perform the function of output during the use of the single cell, and shall not be limited to output only. This shall not be construed as limiting the protection scope of the present application. The output in following embodiments is also understood in this way.

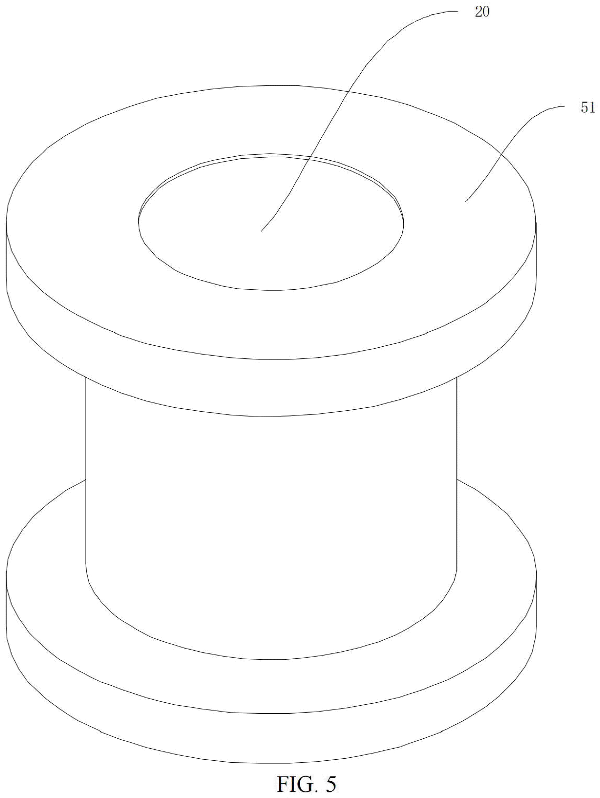

Referring to FIG. 5 together, FIG. 5 is a schematic view of matching between a second conductive member and a first isolation layer according to an embodiment of the present application.

The single cell further includes a first isolation layer 51. The second conductive member 20 is wrapped by the first isolation layer 51. A surface of the second conductive member 20 close to the cell assembly 30 is at least partially exposed.

During an actual processing process, the second conductive member 20 and the cell assembly 30 are usually welded at their abutting portion. As such, in a case where a welding region is exposed, providing the first isolation layer 51 to protect other regions of the second conductive member 20 is an effective method to prolong the service life of the second conductive member 20. During an actual operating process of the single cell, since the first conductive member 10 and the second conductive member 20 are made of dissimilar metals, certain electrochemical corrosion may occur in a connection region of the first conductive member 10 and the second conductive member 20 immersed in the electrolyte. The first isolation layer 51 is used to isolate the first conductive member 10 and the second conductive member 20, so that a corrosion rate of the welding seam between the first conductive member 10 and the second conductive member 20 can be effectively alleviated.

Specifically, a material of the first isolation layer 51 includes at least one of steel and nickel.

On one hand, since steel and nickel are also common materials for the first conductive member 10, electrochemical corrosion is difficult to occur between the first isolation layer 51 and the first conductive member 10 which are in direct contact. On another hand, the seam between the first isolation layer 51 and the second conductive member 20 is enclosed between the second conductive member 20 and the cell assembly 30, so that the electrolyte is difficult to enter the seam, and no electrochemical corrosion environment exists. As such, electrochemical corrosion is also difficult to occur.

In some possible implementations, an area of an exposed portion of the surface of the second conductive member 20 close to the cell assembly 30 is S5, and the area of the first conductive member 10 on the side close to the cell assembly 30 is S1, where 40%≤S5/S1≤100%.

A sufficient exposed area of the second conductive member 20 is a premise for ensuring good weldability and current-carrying capacity between the second conductive member 20 and the cell assembly 30. In a case where S5/S1 is less than 40%, the welding effect will be significantly affected. Preferably, a value of S5/S1 is 70% or 80%.

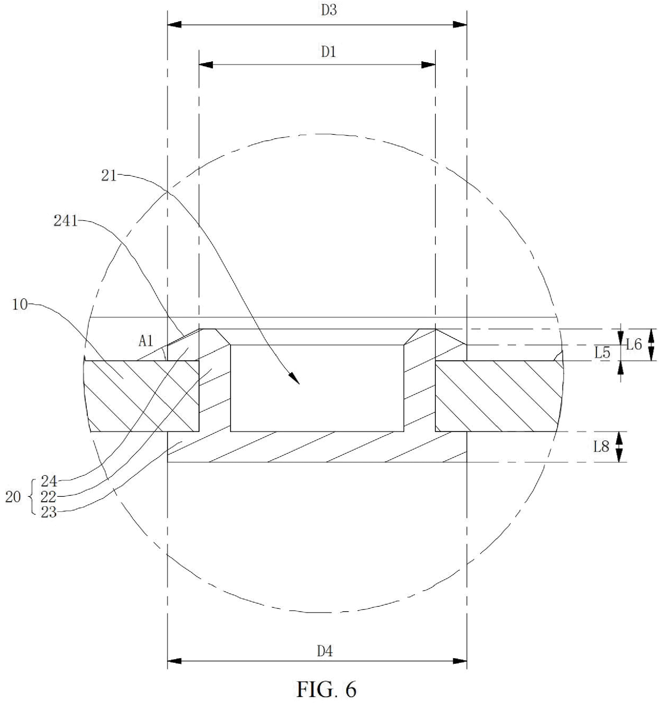

Referring to FIG. 6 together, FIG. 6 is a schematic view of matching between a first conductive member and a second conductive member according to an embodiment of the present application.

In some embodiments of the present application, the second conductive member 20 and the first conductive member 10 are fixed by riveting.

Fixing by riveting is one of common processing processes. That is, a riveting machine is used, so that a portion of the second conductive member 20 passing through the conductive hole 111 is deformed and expanded to snap an edge of the conductive hole 111. The second conductive member 20 and the first conductive member 10 are fixed by riveting, so that a good connection effect between the first conductive member 10 and the second conductive member 20 can be achieved while having a high productivity.

The first conductive member 10 includes a first surface and a second surface opposite to each other. The second conductive member 20 includes a rivet base 23, a rivet post 22, and a rivet buckle 24 connected in sequence. Specifically, the rivet post 22 passes through the conductive hole 111. The rivet base 23 is connected to one end of the rivet post 22. The rivet base 23 abuts against the first surface. The rivet buckle 24 is connected to one end of the rivet post 22 away from the rivet base 23. The rivet buckle 24 is riveted to the second surface.

The rivet base 23 abuts against the first surface, and the rivet buckle 24 abuts against the second surface. The formation of the rivet buckle 24 depends on the deformation caused by stamping of the riveting machine. A length of the rivet post 22 depends on the deformation of the rivet buckle 24 during the riveting process. As such, the rivet post 22 can be self-adaptive to a thickness of the first conductive member 10, so that the first conductive member 10 can be better clamped by the rivet base 23 and the rivet buckle 24.

Specifically, an outer edge of one end of the rivet buckle 24 away from the rivet base 23 is provided with an outer chamfer 241. On any cross section passing through an axis of the rivet buckle 24, an included angle between the outer chamfer 241 and the second surface is A1, where 10°≤A1≤85°.

The arrangement of the outer chamfer 241 can effectively prevent scratching damage between the rivet buckle 24 and other components. If A1 is excessively large, a new convex edge is formed, so that the outer chamfer 241 is meaningless. If A1 is excessively small, the rivet buckle 24 needs to extend a longer distance outward to accommodate a thickness of the rivet buckle 24. A value of A1 is selected within the range of 10°≤A1≤85°, which is beneficial for structural design and can further be adapted to the existing riveting machine. Preferably, the value of A1 is 45°, 48°, or 54°.

Specifically, a distance between an outer edge of the outer chamfer 241 and the second surface is L5, and the thickness of the rivet buckle 24 is L6, where 0≤L5/L6≤70%.

If the distance between the outer edge of the outer chamfer 241 and the second surface is excessively thick, an appearance of the single cell will be affected, and the risk of damage caused by collision of each single cell in a battery pack is increased. 0≤L5/L6≤70% is a preferable value selection. Specifically, in some implementations, L5/L6 is 0%, i.e., the outer edge of the outer chamfer 241 is directly attached to a surface of the first conductive member 10.

In some possible implementations, the thickness of the rivet buckle 24 is L6, and the projection length of the second conductive member 20 in a thickness direction of the rivet buckle 24 is L7, where 10%≤L6/L7≤40%.

Although the thickness of the rivet buckle 24 may vary depending on a thickness of a material riveted with the rivet buckle 24, the thickness of the rivet buckle 24 itself still has a certain reference value. If a size of the rivet buckle 24 is excessively small, there is a risk of the rivet buckle 24 falling off from the rivet post 22, resulting in the failure of the connection between the first conductive member 10 and the second conductive member 20. The rivet buckle 24 having an excessively large size indicates defects in the selection of riveting dimensions, resulting in a large material waste and increasing a redundant weight of the single cell. 10%≤L6/L7≤40% can ensure a connection effect between the first conductive member 10 and the second conductive member 20 while saving materials as much as possible. Preferably, a value of L6/L7 is 20%, 23%, or 25%.

In some possible implementations, the diameter of the conductive hole 111 is D1, and an outer diameter of the rivet buckle 24 is D3, where 120%≤D3/D1≤200%.

A riveting strength is determined by the outer diameter of the rivet buckle 24. On the premise that a size of the conductive hole 111 is fixed, the larger the outer diameter of the rivet buckle 24 is, the better the riveting effect is. Accordingly, the excessively large rivet buckle 24 will cause space occupation and material waste. 120%≤D3/D1≤200% is a selection for saving materials as much as possible on the premise of ensuring the riveting strength. Specifically, in some implementations, D3/D1 is 128% or 130% on the premise of allowable machining accuracy.

In some possible implementations, a diameter of the rivet base 23 is D4, where 2 mm≤D4≤20 mm.

The pressure bearing capacity of the second conductive member 20 during the riveting process is determined by the diameter of the rivet base 23, and is not affected by the conductive hole 111. However, the excessively large rivet base 23 will undoubtedly occupy additional space. As such, 2 mm≤D4≤20 mm can prevent the rivet base 23 from being damaged by riveting processing while saving space as much as possible. Specifically, in some implementations, D4 is 4 mm, 6 mm, and 8 mm.

In some possible implementations, the diameter of the conductive hole 111 is D1, and the diameter of the rivet base 23 is D4, where 130%≤D4/D1≤200%.

The selection of the rivet base 23 should also refer to the conductive hole 111. If a size of the rivet base 23 is excessively small, the rivet base 23 has the risk of being directly inserted into the conductive hole 111 in an interference fit with the conductive hole 111. If the size of the rivet base 23 is excessively large, an additional space is occupied. 130%≤D4/D1≤200% is a preferred solution. Specifically, in some implementations D4/D1 is 130%, 132%, and 135% on the premise of allowable processing accuracy.

In some possible implementations, a thickness of the rivet base 23 is L8, where 0.05 mm≤L8≤2 mm.

The pressure bearing capacity during the riveting process is also affected by the thickness of the rivet base 23 The excessively thin rivet base 23 is prone to be broken during the riveting process. The excessively large rivet base 23 occupies additional space. As such, 0.05 mm≤L8≤2 mm can prevent the rivet base 23 from being damaged by riveting processing while saving space as much as possible. Specifically, in some implementations, L8 is 0.1 mm, 0.5 mm, and 1 mm.

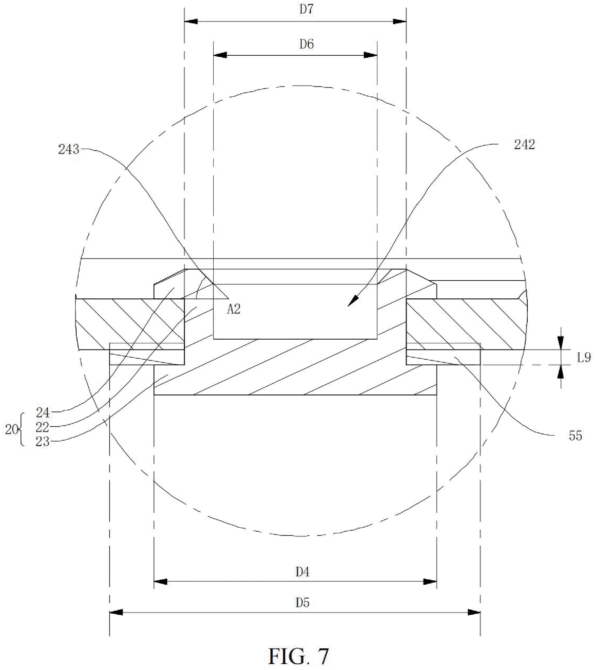

Referring to FIG. 7 together, FIG. 7 is a schematic view of matching between a first conductive member 10, a second conductive member 20, and a first isolation sleeve 55 according to another embodiment of the present application.

In some possible implementations, the single cell further includes a first isolation sleeve 55. The rivet post 22 passes through the first isolation sleeve 55. The first isolation sleeve 55 is sandwiched between the rivet base 23 and the first surface.

The first isolation sleeve 55 is arranged to separate the rivet base 23 from the first surface, so as to prevent the electrochemical corrosion of the first conductive member 10 and the second conductive member 20 caused by their direct contact in the electrolyte. In addition, the first isolation sleeve 55 is sandwiched between the rivet base 23 and the first surface. During the riveting process, the first isolation sleeve 55 will slightly deform to adapt to the rivet base 23 and the first surface, so that the airtightness at the conductive hole 111 can be effectively increased.

Specifically, the diameter of the rivet base 23 is D4, and a diameter of an outer diameter of the first isolation sleeve 55 is D5, where 70%≤D4/D5≤120%.

The diameter of the rivet base 23 and the outer diameter of the first isolation sleeve 55 should be as close as possible. If a difference between the sizes of the rivet base 23 and the first isolation sleeve 55 is excessively large, a redundant structure will be generated, thereby affecting a space utilization rate of the single cell and increasing the additional production cost. D4/D5 satisfies: 70%≤D4/D5≤120%. In some possible implementations, D4/D5 is 95%, 98%, or 100% on the premise of allowable processing accuracy. D4≤D5 can avoid the electrochemical corrosion caused by the rivet base 23 and the first surface facing each other.

Specifically, a thickness of the first isolation sleeve 55 is L9, where 0.5 mm≤L9≤1.5 mm.

The thickness of the first isolation sleeve 55 is an important parameter affecting the insulation and sealing performance of the first isolation sleeve 55. The excessively thin first isolation sleeve 55 cannot be well sealed and is easy to be squeezed and damaged during riveting. The excessively thick first isolation sleeve 55 will occupy the additional space, thereby affecting a space utilization rate of the single cell.

In some embodiments of the present application, the riveted second conductive member 20 is further formed with a riveting hole 242. An opening direction of the riveting hole 242 faces a side of the second conductive member 20 away from the cell assembly 30.

The arrangement of the riveting hole 242 facilitates insertion of a punch of the riveting machine, and also facilitates surrounding rolling of the rivet buckle 24, thereby reducing the risk of damage to the second conductive member 20 during the riveting process.

An edge of the riveting hole 242 is provided with an inner chamfer 243. On any cross section of an axis of the riveting hole 242, an included angle between a plane where the inner chamfer 243 is located and the second surface is A2, where 30°≤A2≤85°.

The inner chamfer 243 is provided to facilitate for guiding alignment between the punch of the riveting machine and the riveting hole 242. If A2 is excessively large, the outer edge of the inner chamfer 243 will be excessively narrow and a guiding effect is insufficient. If A2 is excessively small, the punch and the inner chamfer 243 will collide and the guiding is not performed. 30°≤A2≤85° can ensure a better guiding effect. Specifically, in some implementations, A2 is 40°, 45°, or 48°.

In some possible implementations, a diameter of the riveting hole 242 is D6, and a minimum outer diameter of the second conductive member 20 is D7, where 30%≤D6/D7≤80%.

The diameter of the riveting hole 242 is limited by the outer diameter of the second conductive member 20. If the riveting hole 242 is larger, a hole wall of the riveting hole 242 becomes thinner, and the riveting process is easier to be performed. If the riveting hole 242 is excessively large, the wall thickness at a position of the second conductive member 20 where the riveting hole 242 is provided is excessively thin, thereby affecting the strength and overcurrent capability of the second conductive member 20. A value of D6/D7 is selected within the range of 30%≤D6/D7≤80%, so that the riveting process can be performed as easy as possible while ensuring the strength and overcurrent capability of the second conductive member 20. Specifically, in some implementations, D6/D7 is 40% or 50%.

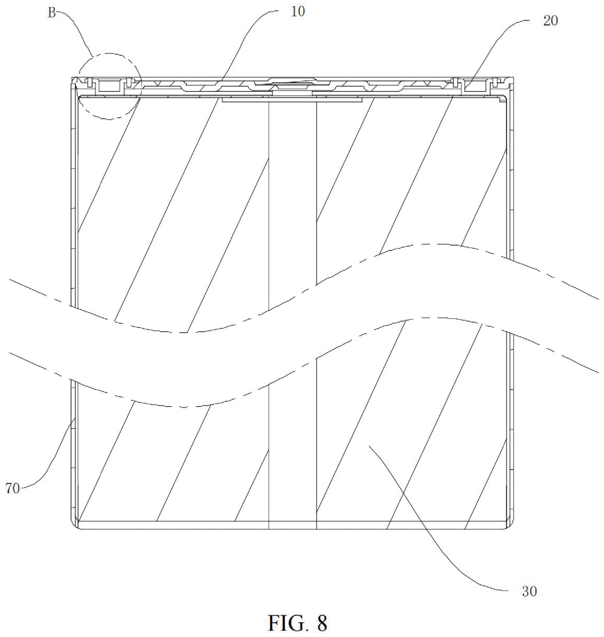

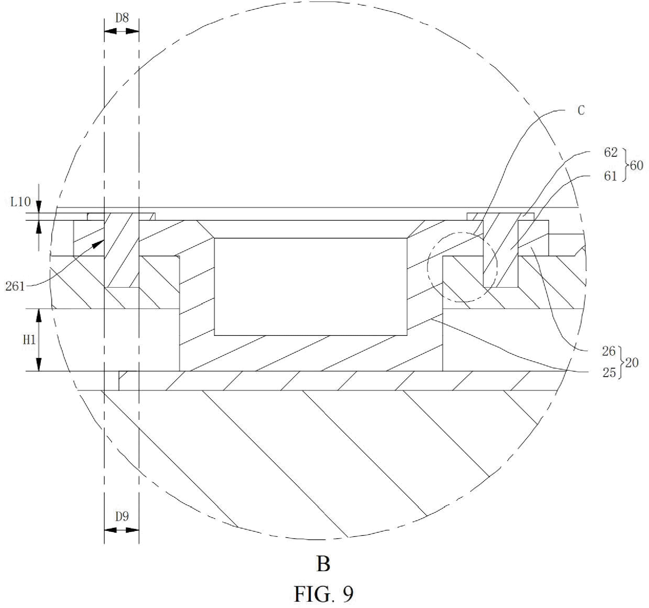

Referring to FIG. 8 and FIG. 9 together, FIG. 8 is an overall cross-sectional view of a single cell according to another embodiment of the present application, and FIG. 9 is a partial enlarged view of a region B in FIG. 8.

In some embodiments of the present application, the single cell further includes a fastener 60. The second conductive member 20 includes a through post 25 and a flange 26. The through post 25 passes through the conductive hole 111. The flange 26 abuts against the first conductive member 10. The fastener 60 passes through at least one of the first conductive member 10 and the second conductive member 20 to connect the first conductive member 10 and the second conductive member 20.

Unlike riveting, the second conductive member 20 of this embodiment only abuts against one surface of a side of the first conductive member 10, the assembly is more flexible, and it is also convenient to design a structure on another surface of the first conductive member 10 opposite to the abutting position.

The flange 26 is provided with a first hole 261. The fastener 60 passes through the first hole 261 and is connected to the first conductive member 10.

On one hand, the fastener 60 is connected to the first conductive member 10. On another hand, the fastener 60 passes through the first hole 261. With the fixing of the fastener 60, the first conductive member 10 and the second conductive member 20 are fastened, so that the connection effect and airtightness between the first conductive member 10 and the second conductive member 20 are optimized.

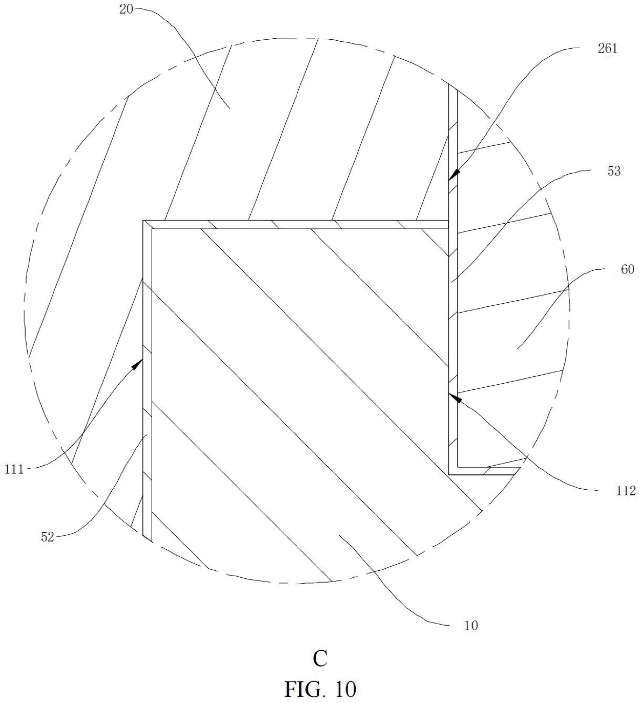

Referring to FIG. 10 together, FIG. 10 is a partial enlarged view of a region C in FIG. 9.

Specifically, a second isolation layer 52 is provided between the first conductive member 10 and the second conductive member 20.

The second isolation layer 52 is provided to at least partially isolate the first conductive member 10 from the second conductive member 20, thereby avoiding electrochemical corrosion caused by direct exposure of the first conductive member 10 and the second conductive member 20.

In some possible implementations, a third isolation layer 53 is disposed on a surface of the fastener 60 in contact with the first conductive member 10 and the second conductive member 20.

The third isolation layer 53 protects the fastener 60 to prevent the fastener 60 from being worn during the fastening process and affecting the fastening effect.

Specifically, the second isolation layer 52 or the third isolation layer 53 is a nickel plating layer.

The nickel plating layer can achieve conductivity while providing protection, which is particularly beneficial for the full wrap-around protection of the first conductive member 10.

Specifically, the second isolation layer 52 or the third isolation layer 53 is at least one of a polypropylene (PP) film or a polyphenylene sulfide (PPS) film.

The PP film and the PPS film are relatively mature protective materials in the field of lithium batteries, with low costs and high processing efficiency.

In some possible implementations, a distance between a surface of the through post 25 on a side close to the cell assembly 30 and a surface of the first conductive member 10 on a side close to the cell assembly 30 is H1, where 0.8≤H1≤2 mm.

The distance between the surface of the through post 25 adjacent to the cell assembly 30 and the surface of the first conductive member 10 adjacent to the cell assembly 30, i.e., a height of the through post 25 protruding from the first conductive surface is H1. In a case where H1 is excessively large, a relatively large gap exists between the cell assembly 30 and the first conductive member 10. In a case where H2 is excessively small, there is a risk of short circuit between the first conductive member 10 and the cell assembly 30, thereby affecting the safety of the single cell. In a case where H1 satisfies: 0.8≤H1≤2 mm, the space utilization rate in the single cell can be improved as much as possible while ensuring the safety. Specifically, in some implementations, H1 is 8 mm, 9 mm, or 10 mm on the premise of allowable production accuracy.

In some possible implementations, a projection area of an outer edge of the flange 26 on the first conductive member 10 is S6, and a contact area between the flange 26 and the first conductive member 10 is S7, where 5%≤S7/S6≤35%.

The connection strength and overcurrent capability between the first conductive member 10 and the second conductive member 20 are affected by the contact area between the flange 26 and the first conductive member 10. In the case where S7/S6 satisfies: 5%≤S7/S6≤35%, the connection strength and overcurrent capability between the first conductive member 10 and the second conductive member 20 can be enhanced as much as possible on the premise that the size of the second conductive member 20 is fixed. Specifically, in some implementations, S7/S6 is 20% or 30%.

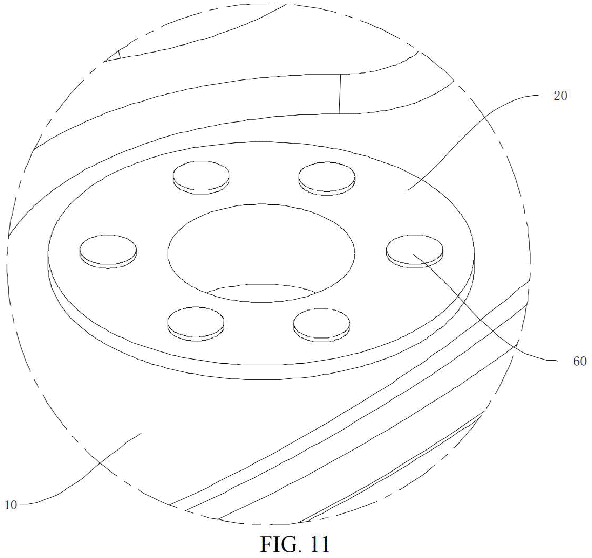

Referring to FIG. 11 together, FIG. 11 is a schematic view of matching between a first conductive member 10, a second conductive member 20, and a fastener 60 according to another embodiment of the present application.

In some possible implementations, a plurality of first holes 261 are provided on each flange 26.

The load can be dispersed by the plurality of first holes 261, so that in a case where a total cross-sectional area of the fastener 60 remains unchanged, a fixing effect is better.

The plurality of first holes 261 are distributed on the flange 26 in a circumferential array.

On one hand, the first holes 261 are provided in the circumferential array, so that a force of the fastener 60 can be more uniform, and the connection strength between the first conductive member 10 and the second conductive member 20 is enhanced. On another hand, the first holes 261 distributed in the circumferential array can further reduce damages to the mechanical properties of the second conductive member 20 as much as possible caused by the holes in the flange 26.

In some possible implementations, the flange 26 abuts against a surface of the first conductive member 10 away from the cell assembly 30.

The flange 26 of the second conductive member 20 abuts against the surface of the first conductive member 10 away from the cell assembly 30. That is, the second conductive member 20 is inserted from an outer side of the single cell and can be finally installed after the first conductive member 10, the cell assembly 30, and other structures are assembled in place. The second conductive member 20 abuts against the cell assembly 30 while being inserted and connected to the first conductive member 10.

In some possible implementations, a diameter of the first hole 261 is D8, where 2.5 mm≤D8≤16 mm.

The diameter of the first hole 261 should be set to adapt to the fastener 60. D8 satisfies: 2.5 mm≤D8≤16 mm, so as to adapt to the fastener 60 with commonly used sizes. Specifically, in some implementations, the diameter D8 of the first hole 261 is 2.5 mm and 16 mm.

In some possible implementations, the first conductive member 10 is provided with a second hole 112, and the fastener 60 passes through the first hole 261 and is inserted into the second hole 112.

The through holes provided on the flange 26 do not interfere with the airtightness of the single cell. The fastener 60 passes through the first hole 261 and is inserted into the second hole 112, so that the connection can be realized while hardly affecting the airtightness of the single cell.

Specifically, the fastener 60 is a screw, and the fastener 60 is in threaded fit with the second hole 112.

The fastener 60 is selected as a screw, which has low part cost, mature production line technology, and high production efficiency.

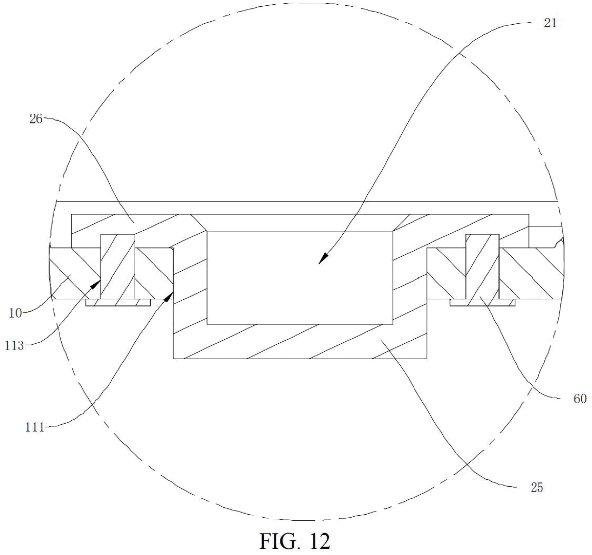

Referring to FIG. 12 together, FIG. 12 is a schematic view of matching between a first conductive member 10, a second conductive member 20, and a fastener 60 according to another embodiment of the present application.

In some embodiments of the present application, the first conductive member 10 is provided with a third hole 113. The fastener 60 passes through the third hole 113 and is connected to the second conductive member 20.

This embodiment provides another fastening manner between the first conductive member 10 and the second conductive member 20.

In some embodiments of the present application, the fastener 60 includes a first portion 61 and a second portion 62 connected to each other. The first portion 61 passes through the first hole 261 or the third hole 113. The second portion 62 abuts against a surface of the second conductive member 20 away from the first conductive member 10. Alternatively, the second portion 62 abuts against a surface of the first conductive member 10 away from the second conductive member 20.

The second portion 62 abuts against the first conductive member 10 or the second conductive member 20. After the fastener 60 is removed, an abutting surface still maintains an original structure, thereby reducing damages to the components.

Specifically, a diameter of the first portion 61 is D9, where 2.5 mm≤D9≤16 mm.

On the premise that the diameter of the first portion 61 meets the strength requirements, the common part size range of 2.5 mm≤D9≤16 mm is selected, so that the production cost can be reduced. Specifically, in some implementations, D9 is 2.5 mm and 16 mm.

Specifically, a thickness of the second portion 62 is L10, where 0.5 mm≤L10≤2 mm.

The pressure bearing capacity during the fastening process is affected by the thickness of the second portion 62. The excessively thin second portion 62 is easily broken during the fastening process. The excessively large second portion 62 occupies additional space. As such, 0.5 mm≤L10≤2 mm can prevent the second portion 62 from being damaged by fastening processing while saving space as much as possible. Specifically, in some implementations, L10 is 0.5 mm and 1 mm.

In some embodiments of the present application, the single cell further includes a second isolation sleeve 56. The second isolation sleeve 56 is sleeved on the through post 25. The second isolation sleeve 56 is partially sandwiched between the first conductive member 10 and the second conductive member 20.

The airtightness at the conductive hole 111 is enhanced due to the arrangement of the second isolation sleeve 56. Since the first conductive member 10 is clamped tightly to the second conductive member 20, the second isolation sleeve 56 can be adaptively slightly deformed on surfaces of the two, thereby further filling part surface defects of parts that may damage the airtightness.

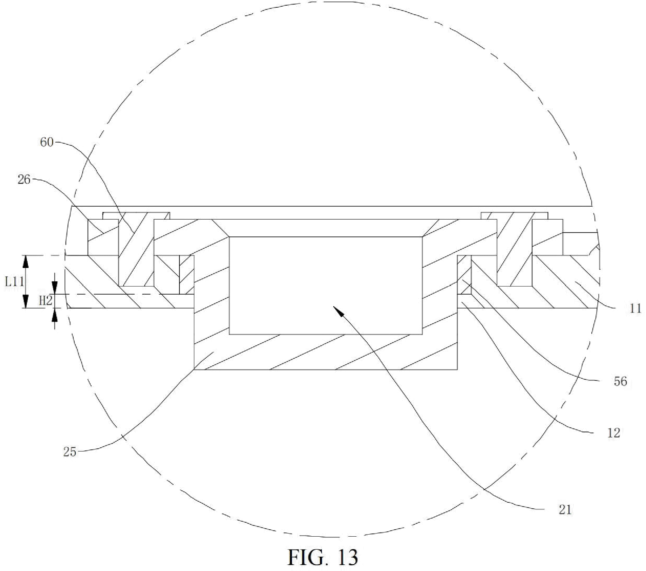

Referring to FIG. 13, FIG. 13 is a schematic view of matching between a first conductive member 10, a second conductive member 20, a fastener 60, and a second isolation sleeve 56 according to another embodiment of the present application.

The first conductive member 10 includes a plate body 11 and a boss 12. The conductive hole 111 is provided in the plate body 11. The boss 12 protrudes from an inner wall of the conductive hole 111. The second isolation sleeve 56 is sandwiched between the boss 12 and the flange 26.

The second isolation sleeve 56 is sandwiched between the second conductive member 20 and the boss 12, so as to better position the second isolation member, thereby preventing the second isolation member from being pushed out of the conductive hole 111 during the insertion of the second conductive member 20, which affects the assembly effect and sealing ability.

Specifically, a height of the boss 12 is H2, where 0.5 mm<H2≦5 mm.

The bearing capacity of the boss 12 is affected by the height of the boss 12. If the height of the boss 12 is excessively small, there is a risk of being crushed by the second conductive member 20. If the height of the boss 12 is excessively large, the space for placing the second isolation member is excessively small, thereby affecting the sealing effect. 0.5 mm<H2≦5 mm is a selection to reduce the space occupied by boss 12 as much as possible on the premise that the strength of boss 12 is guaranteed.

In some possible implementations, the height of the boss 12 is H2, and the thickness of the first conductive member 10 is L11, where 20%≤H2/L11≤50%.

The height of the boss 12 is also affected by the thickness of the first conductive member 10. During actual production, in addition to ensuring its own strength, the height of the boss 12 also needs to take into account the thickness of the first conductive member 10. 20%≤H2/L11≤50% can provide the second isolation member with as large a space as possible while ensuring the strength of the boss 12.

In some possible implementations, the height of the boss 12 is H2, the thickness of the first conductive member 10 is L11, and a natural length of the second isolation sleeve 56 is L12, where H2+L12>L11.

A sum of the height of the boss 12 and the natural length of the second isolation sleeve 56 is greater than the thickness of the first conductive member 10. That is, during a process where the second conductive member 20 is inserted into the conductive hole 111 and assembled in place, the second isolation sleeve 56 is squeezed, and the thickness is increased while a length becomes shorter, so that the sealing effect is better.

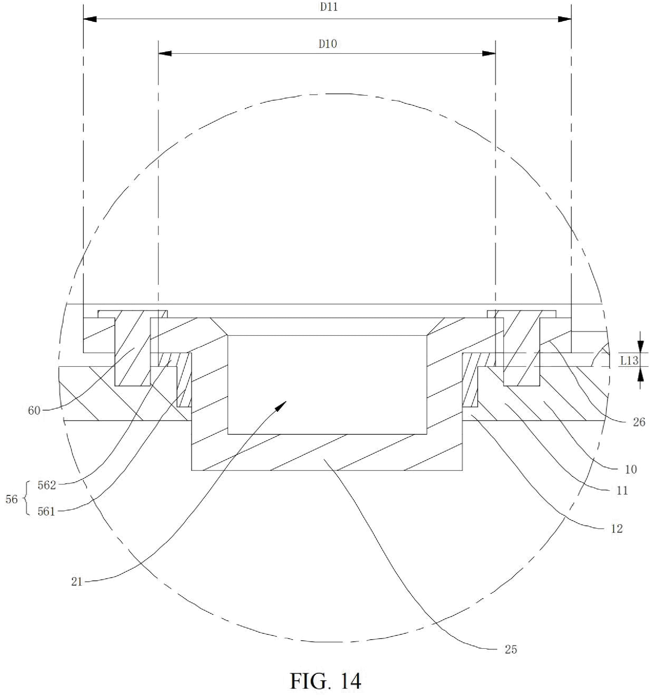

Referring to FIG. 14, FIG. 14 is a schematic view of matching between a first conductive member 10, a second conductive member 20, a fastener 60, and a second isolation sleeve 56 according to another embodiment of the present application.

In some possible implementations, the second isolation sleeve 56 includes a ring sleeve portion 561 and a gasket portion 562. The ring sleeve portion 561 at least partially passes through the conductive hole 111. The gasket portion 562 is at least partially sandwiched between the flange 26 and the first conductive member 10.

The gasket portion 562 of the second isolation sleeve 56 is sandwiched between the second conductive member 20 and the first conductive member 10, so that the position of the second isolation sleeve 56 is fixed by the edge of the conductive hole 111, thereby preventing the second isolation sleeve 56 from sliding into the conductive hole 111, resulting in assembly errors.

An outer diameter of the gasket portion 562 is D10, and an outer diameter of the flange 26 is D11, where 70%≤D11/D10≤120%.

The diameter of the gasket portion 562 and the outer diameter of the flange 26 should be as close as possible. If a difference between sizes of the two is excessively large, a redundant structure will be generated, thereby increasing additional production costs. D11/D10 satisfies: 70%≤D11/D10≤120%. In some possible implementations, D11/D10 is 98%, 100%, or 102% on the premise of allowable processing accuracy.

In some possible implementations, a thickness of the gasket portion 562 is L13, where 0.5≤L13≤1.5 mm.

The thickness of the gasket portion 562 is an important parameter affecting the insulation and sealing performance of the second isolation sleeve 56. The excessively thin gasket portion 562 cannot be well sealed, and is also easily squeezed and damaged during fastening. The excessively thick second isolation sleeve 56 will occupy additional space, thereby affecting the space utilization rate of the single cell.

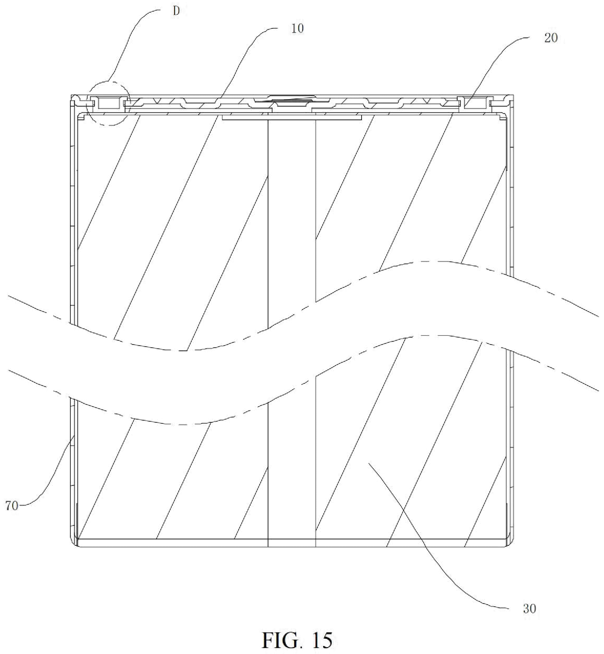

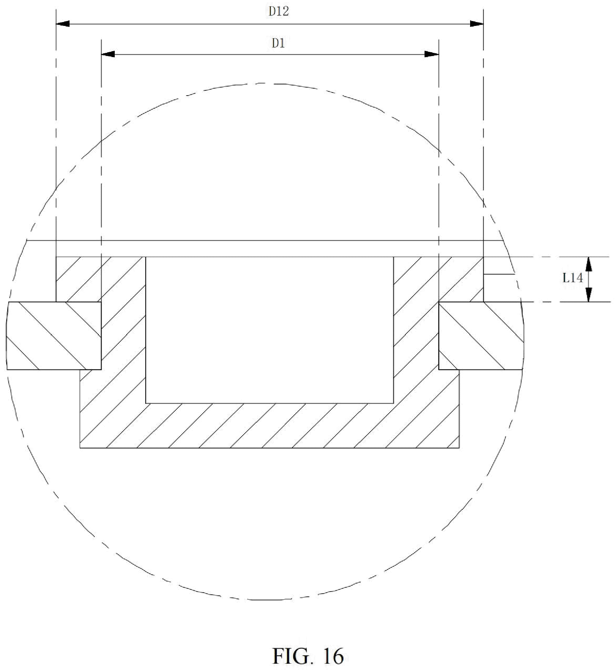

Referring to FIG. 15 and FIG. 16 together, FIG. 15 is an overall cross-sectional view of a single cell according to another embodiment of the present application, and FIG. 16 is a partial enlarged view of a region D in FIG. 15.

In some embodiment of the present application, the second conductive member 20 passes through the conductive hole 111 to be snap-fitted with the first conductive member 10.

The second conductive member 20 is snap-fitted with the first conductive member 10, i.e., a partial structure of the second conductive member 20 with the outer diameter greater than the conductive hole 111 is extruded from the conductive hole 111 and snap-fitted with another end of the conductive hole 111, the assembly process is mature, and the production efficiency is higher.

Specifically, the first conductive member 10 includes a first surface and a second surface opposite to each other. The second conductive member 20 includes a base 28, a connecting rod 27, and a snap 29 connected in sequence. The connecting rod 27 passes through the conductive hole 111. The base 28 is connected to one end of the connecting rod 27. The base 28 abuts against the second surface. The snap 29 is connected to one end of the connecting rod 27 away from the base 28. The snap 29 is snap-fitted with the first surface.

The snap 29 is snap-fitted with the first surface to fix the second conductive member 20 on the first surface. The base 28 abuts against the second surface, thereby preventing the second conductive member 20 from sliding into the conductive hole 111 as a whole or squeezing the cell assembly 30.

An outer diameter of the base 28 is D12, where 2 mm≤D12≤20 mm.

The pressure bearing capacity of the second conductive member 20 during the snap process is determined by the diameter of the base 28, and is not affected by the conductive hole 111. However, the excessively large base 28 will undoubtedly occupy the additional space. As such, D12 satisfies: 2 mm≤D12≤20 mm, so that the base 28 can be prevented from being damaged by snap-fitted processing while saving space as much as possible. Specifically, in some implementations, D12 is 4 mm, 6 mm, and 8 mm.

In some possible implementations, the diameter of the conductive hole 111 is D1, and the outer diameter of the base 28 is D12, where 130%≤D12/D1≤200%.

The selection of the base 28 should also refer to the conductive hole 111. If a size of the base 28 is excessively small, the base 28 has the risk of being directly inserted into the conductive hole 111 in an interference fit with the conductive hole 111. If the size of the base 28 is excessively large, an additional space is occupied. 130%≤D12/D1≤200% is a preferred solution. Specifically, in some implementations D12/D1 is 130%, 132%, and 135% on the premise of allowable processing accuracy.

In some possible implementations, a thickness of the base 28 is L14, where 0.2 mm≤L14≤2 mm.

The pressure bearing capacity during the riveting process is also affected by the thickness of the base 28. The excessively thin base 28 is prone to be broken during the snap-fitted process. The excessively large base 28 occupies additional space. As such, 0.2 mm≤L14≤2 mm can prevent the base 28 from being damaged by snap-fitted processing while saving space as much as possible. Specifically, in some implementations, L14 is 0.5 mm and 1 mm.

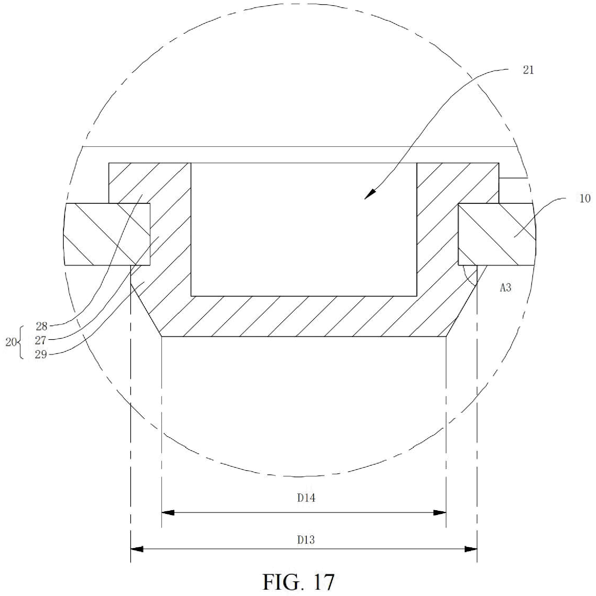

Referring to FIG. 17 together, FIG. 17 is another schematic view of matching between a first conductive member 10 and a second conductive member 20 according to an embodiment of the present application.

In some possible implementations, the outer diameter of the snap 29 decreases away from the base 28.

The outer diameter of the snap 29 decreases away from the base 28, i.e., the second conductive member 20 has a guide slope at an insertion front end, which facilitates the alignment of the clamping connection.

The diameter of the conductive hole 111 is D1, and a maximum outer diameter of the snap 29 is D13, where 102%≤D13/D1≤150%.

In order to ensure good abutment between the snap 29 and the first surface, the maximum outer diameter of the snap 29, i.e., an outer edge of an abutment region between the snap 29 and the first surface, should be large enough. Since the snap 29 is in interference fit when passing through the conductive hole 111, if the outer diameter of the snap 29 is excessively large, the conductive hole 111 may be fractured. 102%≤D13/D1≤150% may reduce the risk of the conductive hole 111 being fractured while ensuring stable abutment between the snap 29 and the first surface. Specifically, in some implementations, D13/D1 is 105%, 108%, or 110%.

In some possible implementations, the diameter of the conductive hole 111 is D1, and a minimum outer diameter of the snap 29 is D14, where 60%≤D14/D1≤97%.

The minimum outer diameter of the snap 29, i.e., a portion of the snap 29 first inserted into the conductive hole 111, bears the function of guiding the insertion of the second conductive member 20. If D14 is sufficiently small, which is conducive to guiding the insertion of the second conductive member 20. However, if D14 is excessively small, the second conductive member 20 may collide with the edge of the conductive hole 111 when inserted. 60%≤D14/D1≤97% is a value range with a better guiding effect. Specifically, in some implementations, D14/D1 is 85%, 90%, or 92%.

In some possible implementations, on any cross section passing through an axis of the snap 29, an included angle between a tangent line of an outer contour of the snap 29 and the first surface is A3, where 60%≤A3≤85%.

The difficulty of inserting the snap 29 into the conductive hole 111 is determined by the included angle between the tangent line of the outer contour of the snap 29 and the first surface. The larger A3 is, the easier to guide and align after a side wall of the snap 29 is in contact with the edge of the conductive hole 111, and the higher the requirement on the insertion accuracy of a snap-fit machine is. Although the smaller A3 will reduce an alignment guiding component force after the side wall of the snap 29 is in contact with the edge of the conductive hole 111, it provides a larger eccentric error range for the insertion of the snap 29. Under a condition of a same maximum outer diameter, the snap 29 with the smaller A3 can guide and align under the condition of a larger eccentric distance. 60%≤A3≤85% may increase an eccentricity error range as much as possible on the premise that the abutting component force at the edge of the conductive hole 111 is sufficient to complete guidance. A3 is preferably 70% or 75%.

In some embodiments of the present application, the single cell further includes a second isolation sleeve 56. The second isolation sleeve 56 is sleeved on the through post 25. The second isolation sleeve 56 is partially sandwiched between the first conductive member 10 and the second conductive member 20.

The airtightness at the conductive hole 111 is enhanced due to the arrangement of the second isolation sleeve 56. Since the first conductive member 10 is clamped tightly to the second conductive member 20, the second isolation sleeve 56 can be adaptively slightly deformed on surfaces of the two, thereby further filling part surface defects of parts that may damage the airtightness.

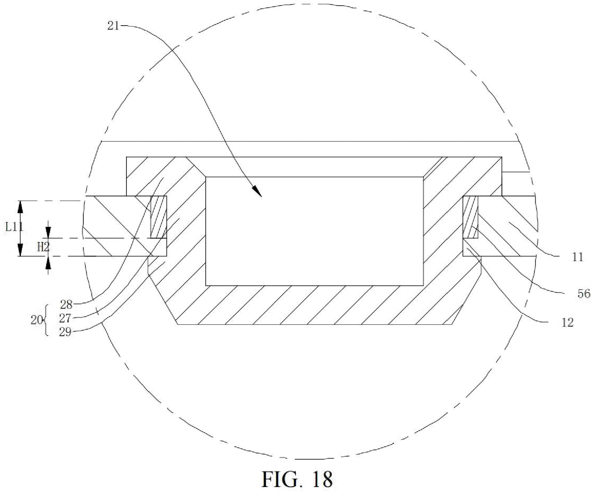

Referring to FIG. 18 together, FIG. 18 is a schematic view of matching between a first conductive member 10, a second conductive member 20, and a second isolation sleeve 56 according to another embodiment of the present application.

The first conductive member 10 includes a plate body 11 and a boss 12. The conductive hole 111 is provided in the plate body 11. The boss 12 protrudes from an inner wall of the conductive hole 111. The second isolation sleeve 56 is sandwiched between the boss 12 and the base 28.

The second isolation sleeve 56 is sandwiched between the second conductive member 20 and the boss 12, so as to better position the second isolation member, thereby preventing the second isolation member from being pushed out of the conductive hole 111 during the insertion of the second conductive member 20, which affects the assembly effect and sealing ability.

Specifically, a height of the boss 12 is H2, where 1 mm<H2≦5 mm.

The bearing capacity of the boss 12 is affected by the height of the boss 12. If the height of the boss 12 is excessively small, there is a risk of being crushed by the second conductive member 20. If the height of the boss 12 is excessively large, the space for placing the second isolation member is excessively small, thereby affecting the sealing effect. 0.5 mm<H2≦5 mm is a selection to reduce the space occupied by boss 12 as much as possible on the premise that the strength of boss 12 is guaranteed.

Specifically, the height of the boss 12 is H2, and the thickness of the first conductive member 10 is L11, where 40%≤H2/L11≤60%.

The height of the boss 12 is also affected by the thickness of the first conductive member 10. During actual production, in addition to ensuring its own strength, the height of the boss 12 also needs to take into account the thickness of the first conductive member 10. 20%≤H2/L11≤60% can provide the second isolation member with as large a space as possible while ensuring the strength of the boss 12.

Specifically, the height of the boss 12 is H2, the thickness of the first conductive member 10 is L11, and a natural length of the second isolation sleeve 56 is L12, where H2+L12≥L11.

A sum of the height of the boss 12 and the natural length of the second isolation sleeve 56 is greater than the thickness of the first conductive member 10. That is, during a process where the second conductive member 20 is inserted into the conductive hole 111 and assembled in place, the second isolation sleeve 56 is squeezed, and the thickness is increased while a length becomes shorter, so that the sealing effect is better.

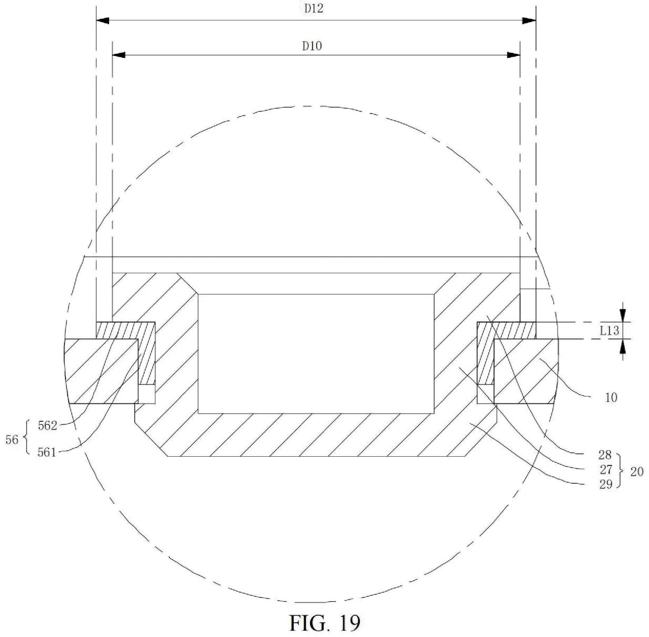

Referring to FIG. 19 together, FIG. 19 is a schematic view of matching between a first conductive member 10, a second conductive member 20, and a second isolation sleeve 52 according to another embodiment of the present application.

In some possible implementations, the second isolation sleeve 56 includes a ring sleeve portion 561 and a gasket portion 562. The ring sleeve portion 561 at least partially passes through the conductive hole 111. The gasket portion 562 is at least partially sandwiched between the base 28 and the first conductive member 10.

The gasket portion 562 of the second isolation sleeve 56 is sandwiched between the second conductive member 20 and the first conductive member 10, so that the position of the second isolation sleeve 56 is fixed by the edge of the conductive hole 111, thereby preventing the second isolation sleeve 56 from sliding into the conductive hole 111, resulting in assembly errors.

Specifically, an outer diameter of the gasket portion 562 is D10, and an outer diameter of the base 28 is D12, where 70%≤D12/D10≤120%.

The diameter of the gasket portion 562 and the outer diameter of the base 28 should be as close as possible. If a difference between sizes of the two is excessively large, a redundant structure will be generated, thereby increasing additional production costs. D12/D10 satisfies: 70%≤D12/D10≤120%. In some possible implementations, D12/D10 is 98%, 100%, or 102% on the premise of allowable processing accuracy.

Specifically, the thickness of the gasket portion 562 is L13, where 0.5≤L13≤1.5 mm.

The thickness of the gasket portion 562 is an important parameter affecting the insulation and sealing performance of the second isolation sleeve 56. The excessively thin gasket portion 562 cannot be well sealed, and is also easily squeezed and damaged during snap-fitting. The excessively thick second isolation sleeve 56 will occupy additional space, thereby affecting the space utilization rate of the single cell.

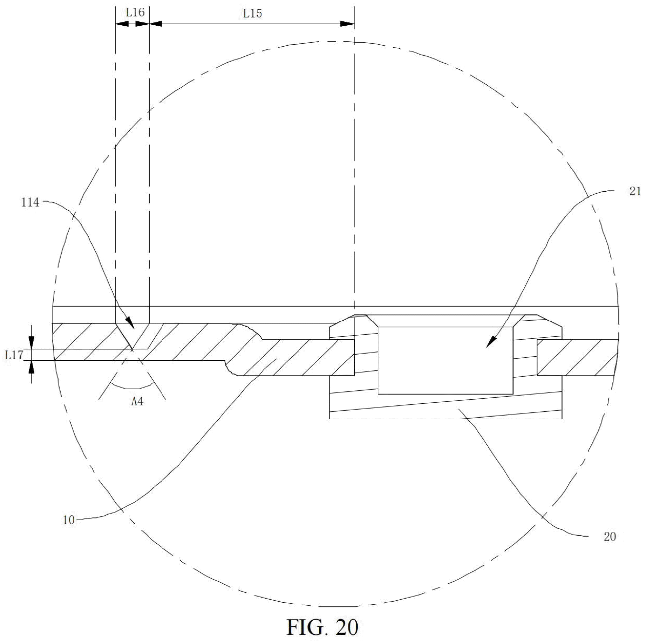

Referring to FIG. 20 together, FIG. 20 is a partial enlarged view of a region E in FIG. 2.

In some embodiments of the present application, the first conductive member 10 is further formed with a pressure relief groove 114. The pressure relief groove 114 avoids the conductive hole 111 and is recessed on a surface of the first conductive member 10.

Due to the arrangement of the pressure relief groove 114, the structural strength of a region of the first conductive member 10 corresponding to the pressure relief groove 114 is reduced, so that it becomes a structural weak point of the outer casing of the single cell. In a case where an internal pressure rises due to an unexpected situation inside the single cell, such as thermal runaway, the first conductive member 10 in the region of the pressure relief groove 114 is damaged, and the internal pressure of the single cell is released, so as to avoid explosion caused by excessive internal pressure accumulation.

A distance between an edge of the pressure relief groove 114 and an edge of the conductive hole 111 is L15, where 2 mm<L15<35 mm.

The pressure relief groove 114 avoids the conductive hole 111. The distance between the edge of the pressure relief groove 114 and the edge of the conductive hole 111 will have an additional impact on the structural strength of the first conductive member 10. In a case where the pressure relief groove 114 and the conductive hole 111 are excessively close, the pressure relief groove 114 will have a risk of cracking when the second conductive member 20 is assembled. 2 mm<L15<35 mm may ensure stable assembly of the second conductive member 20 on the premise that the structure is as tight as possible. Specifically, in some implementations, L15 is 2 mm, 3 mm, or 5 mm.

In some possible implementations, a maximum width of the pressure relief groove 114 is L16, where 0.05 mm≤L16≤5 mm.

The width of the pressure relief groove 114 affects the distribution of structural weak surfaces formed by the pressure relief groove 114. If the pressure relief groove 114 is excessively narrow, the pressure relief effect is weaker. If the pressure relief groove 114 is excessively wide, the structural strength of the first conductive member 10 is greatly affected, so that there is also a risk of cracking under normal use conditions. 0.05 mm≤L16≤5 mm can meet the pressure relief function of the pressure relief groove 114 while ensuring the structural strength of the first conductive member 10. Specifically, in some implementations, L16 is 0.1 mm or 0.2 mm.

In some possible implementations, the first conductive member 10 includes a first surface and a second surface arranged opposite to each other. The first surface is configured to face the cell assembly 30. The pressure relief groove 114 is disposed on the second surface.

The pressure relief groove 114 is provided on the second surface. In a case where the internal pressure of the single cell rises, the first surface of the first conductive member 10 is pressed, the first conductive member 10 bulges outward, and the pressure relief groove 114 has a tendency to open. Stress concentration also exists at the bottom of the pressure relief groove 114, which is beneficial for reducing the damage of the first conductive member 10 when the internal pressure of the single cell rises.

Specifically, a distance between the bottom of the pressure relief groove 114 and the first surface is L17, where 0.02 mm≤L17≤1.5 mm.

If the distance between the bottom of the pressure relief groove 114 and the first surface is excessively large, the pressure relief effect is weaker. If the distance between the bottom of the pressure relief groove 114 and the first surface is excessively small, the structural strength of the first conductive member 10 is greatly affected, and the first conductive member 10 is at risk of breaking even under normal use conditions. 0.02 mm≤L17≤1.5 mm can satisfy the pressure relief function of the pressure relief groove 114 while ensuring the structural strength of the first conductive member 10. Specifically, in some implementations, L17 is 0.1 mm or 0.15 mm.

It should be noted that the bottom herein does not refer to a specific plane, and should be understood as the position closest to the first surface in the pressure relief groove 114, which may not limit the shape of this embodiment.

In some possible implementations, an included angle between two groove walls of the pressure relief groove 114 is A4, where 20°≤A4≤90°.

The included angle A4 is related to the stress concentration at the bottom of the pressure relief groove 114. In a case where the included angle A4 is excessively small, the stress concentration at the bottom of the pressure relief groove 114 will be more obvious, and the first conductive member 10 will also crack under the condition that the single cell operates normally and generates heat. In a case where the included angle A4 is excessively large, the width of the widest portion of the pressure relief groove 114 will be excessively large, and the strength of the first conductive member 10 will also be affected. It can be known through experiments that 20°≤A4≤90° is a preferred range of included angle. Furthermore, specifically, A4 is 50° or 60° in some implementations.

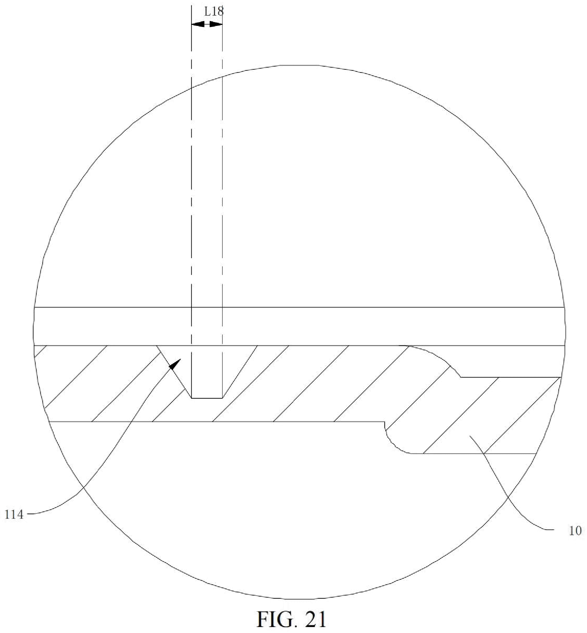

Referring to FIG. 21 together, FIG. 21 is another schematic view of matching between a pressure relief groove 114 and a second conductive member 20 according to an embodiment of the present application.

In some possible implementations, a cross section of the pressure relief groove 114 in a direction perpendicular to an extension direction of the pressure relief groove 114 is a trapezoid. A lower bottom of the trapezoid is located on a surface of the first conductive member 10.

There is a plane at the bottom of the pressure relief groove 114, which can relieve stress concentration to a certain extent, enhance the structural strength of the first conductive member 10 on the premise that a depth of the pressure relief groove 114 and the thickness of the first conductive member 10 remain unchanged, and avoid accidental damage to the first conductive member 10 during normal use.

Specifically, a length of an upper bottom of the trapezoid is L18, where 0.02 mm≤L18≤3 mm.

If the length of the upper bottom is excessively small, the effect of relieving stress concentration is not obvious enough. If the length of the upper bottom is excessively large, the pressure relief groove 114 is excessively wide, which also affects the structural strength of the first conductive member 10. 0.02 mm≤L18≤3 mm is a value range where stress concentration is not easy to be generated on the premise of maintaining a narrow pressure relief groove 114. Specifically, in some implementations, L18 is 1 mm.

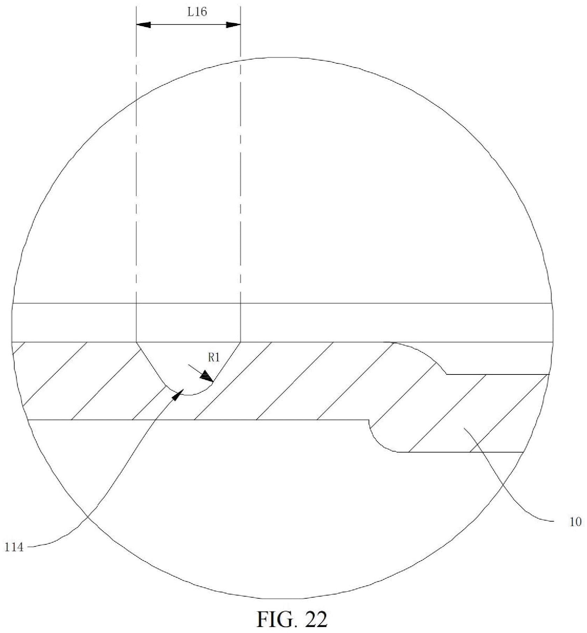

Referring to FIG. 22 together, FIG. 22 is another schematic view of matching between a pressure relief groove 114 and a second conductive member 20 according to an embodiment of the present application.

In some possible implementations, a bottom of the pressure relief groove 114 is provided with a rounded corner.

The bottom of the pressure relief groove 114 is provided with the rounded corner, which can relieve stress concentration to a certain extent, enhance the structural strength of the first conductive member 10 on the premise that the depth of the pressure relief groove 114 and the thickness of the first conductive member 10 remain unchanged, and avoid accidental damage to the first conductive member 10 during normal use.

Specifically, a radius of the rounded corner is R1, and a maximum width of the pressure relief groove 114 is L16, where 20%≤R1/L16≤100%.

If the radius of the rounded corner is excessively small, the effect of relieving stress concentration is not obvious enough. If the radius of the rounded corner is excessively large, the pressure relief groove 114 is excessively wide, which also affects the structural strength of the first conductive member 10. 20%≤R1/L16≤100% is a value range where stress concentration is not easy to be generated on the premise of maintaining a narrow pressure relief groove 114. Specifically, in some implementations, R1/L16 is 50%.

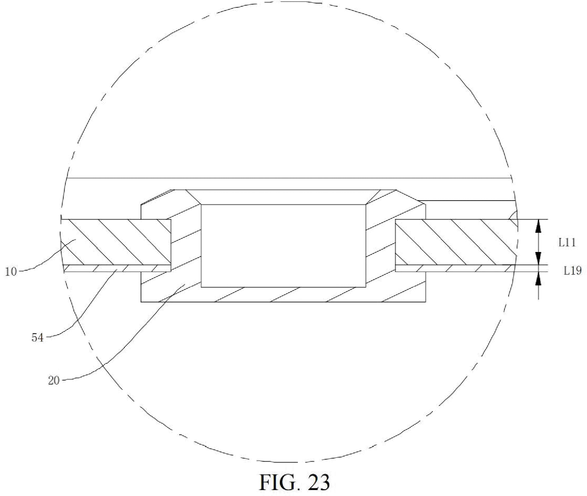

Referring to FIG. 23 together, FIG. 23 is a schematic view of matching between a first conductive member 10, a second conductive member 20, and a fourth isolation layer 54 according to an embodiment of the present application.

In some embodiments of the present application, the single cell further includes a fourth isolation layer 54. The fourth isolation layer 54 covers a surface of the first conductive member 10 on a side facing the cell assembly 30.

The fourth isolation layer 54 covers the surface of the first conductive member 10 on the side facing the cell assembly 30, so as to at least partially isolate the first conductive member 10 from the electrolyte, thereby alleviating a corrosion rate of the first conductive member 10, and prolonging the service life of the single cell.

For example, the fourth isolation layer 54 is one of a nickel plating layer or an iron alloy plating layer.

The plated nickel plating layer or iron alloy plating layer has electrical conductivity. In a case where the fourth isolation layer 54 is sandwiched between the first conductive member 10 and the second conductive member 20, the fourth isolation layer 54 can share a part of the current, and isolate regions of the first conductive member 10 and the second conductive member 20 immersed in the electrolyte from each other, thereby reducing an impact on current-carrying capacity of the single cell.

Exemplarily, the fourth isolation layer 54 is one of a PP film or PPS.

The PP film and the PPS film are relatively mature protective materials in the field of lithium batteries, with low costs and high processing efficiency.

Specifically, the area of the first conductive member 10 on the side close to the cell assembly 30 is S1, and a projection area of the fourth isolation layer 54 on the surface of the first conductive member 10 is S8, where 5%≤S8/S1≤97%.

An area proportion of the fourth isolation layer 54 is related to its isolation ability, and 5%≤S8/S1≤97% is a preferred value range of the experiments.

Specifically, a thickness of the fourth isolation layer 54 is L19, where 0.05 mm≤L19≤2 mm.

An isolation effect of the fourth isolation layer 54 is positively correlated with the thickness of the fourth isolation layer 54. The excessively thin fourth isolation layer 54 has a risk of being penetrated through. The excessively thick fourth isolation layer 54 will cause additional space occupation and increase of production costs. 0.05 mm≤L19≤2 mm is a value range that minimizes space occupation while ensuring the isolation effect.

Specifically, the thickness of the fourth isolation layer 54 is uniformly distributed on the entire surface of the first conductive member 10.

The uniformly distributed fourth isolation layer 54 has uniform isolation effect, simple processing technology, and high production efficiency.

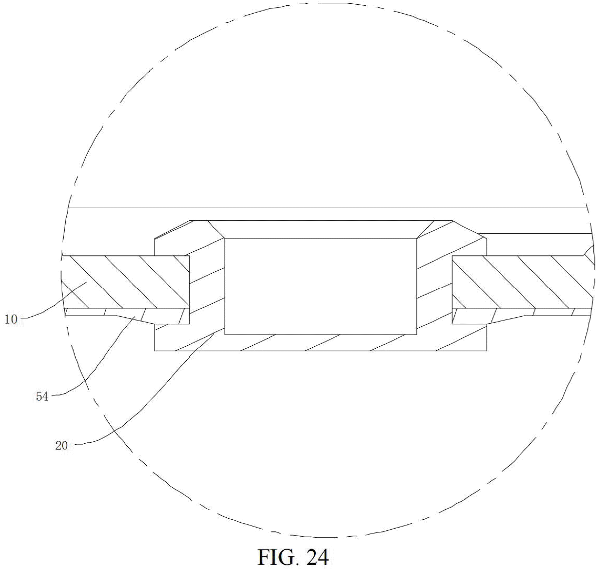

Referring to FIG. 24 together, FIG. 24 is a schematic view of matching between a first conductive member 10, a second conductive member 20, and a fourth isolation layer 54 according to another embodiment of the present application.

In some possible implementations, the thickness of the fourth isolation layer 54 increases as the fourth isolation layer 54 approaches the conductive hole 111.

A plurality of component abutting surfaces are provided at the position close to the conductive hole 111. The fourth isolation layer 54 is coated with a larger thickness at the conductive hole 111 to effectively enhance the isolation effect in the corresponding region.

In some embodiments of the present application, a thickness of the first conductive member 10 is L11, where 0.5 mm≤L11≤2 mm.

The first conductive member 10 bears the functions of conduction and physical protection. The excessively thin first conductive member 10 has poor current-carrying capacity and structural strength. The excessively thick first conductive member 10 will cause the increase of production cost and additional weight and volume. 0.5 mm≤L11≤2 mm is a value range that can still maintain better structural strength and current-carrying capacity on the premise of reducing space occupation as much as possible. Specifically, in some implementations, L11 is 1 mm.

It should be noted that the first conductive member 10 may be formed by splicing a plurality of plate bodies 11. The plate bodies 11 are located on different planes. In this case, L11 is a thickness of the plate body 11 rather than a distance between surfaces of two plate bodies 11 that are farthest.

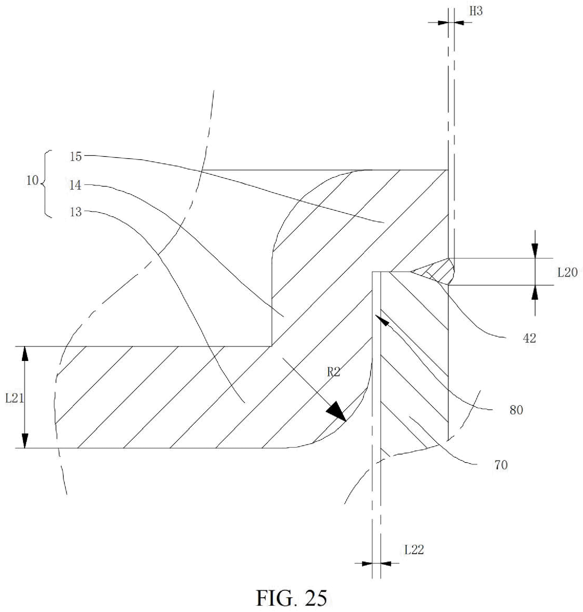

Referring to FIG. 25 together, FIG. 25 is a schematic view of a connection relationship between a first conductive member 10 and a casing 70 according to an embodiment of the present application.

In some embodiments of the present application, the single cell further includes a casing 70. An opening is provided on one side of the casing 70. The first conductive member 10 blocks the opening of the casing 70 and the casing 70 to enclose an accommodating space. The cell assembly 30 is disposed in the accommodating space.

The first conductive member 10 blocks the opening and encloses with the casing 70 to form an accommodating space. The cell assembly 30 is disposed in the accommodating space. In this way, it is possible to first complete the connection between the first conductive member 10 and the second conductive member 20. When the first conductive member 10 is fastened to the casing 70, the second conductive member 20 abuts against the cell assembly 30. Alternatively, the first conductive member 10, the casing 70, and the cell assembly 30 are assembled first, and then the second conductive member 20 passes through the conductive hole 111 and abuts against the cell assembly 30, so that the assembly process is more flexible.

The single cell further includes a second welding seam 42. The first conductive member 10 and the casing 70 are connected by the second welding seam 42.

The first conductive member 10 and the casing 70 are connected through the second welding seam 42, so as to ensure the connection strength and airtightness of the outer casing of the single cell. Since the second welding seam 42 bears a considerable part of the connection function, the requirement for the welding strength between the second conductive member 20 and the cell assembly 30 is also reduced, so that the second conductive member 20 and the cell assembly 30 are less likely to be disconnected.

Specifically, a height of the second welding seam 42 protruding from the surface of the casing 70 is H3, where 0 mm≤H3≤3 mm.

The portion of the second welding seam 42 protruding from the surface of the casing 70 will increase the probability of scratching of the adjacent single cell in the cell pack. As such, 0 mm≤H3≤3 mm is configured to protect the single cell and prolong the service life of the single cell. A mill or the like may also be used to make H3 as close to 0 mm as possible if conditions allow.

Specifically, a width of the second welding seam 42 is L20, where 2 mm≤L20≤6 mm.

Since the mechanical property of the welding seam is usually greater than the mechanical property of a base material, a sufficiently large width of the second welding seam 42 can ensure the connection strength between the casing 70 and the first conductive member 10. However, limited by the strength of the casing 70 and the first conductive member 10, the excessively large second welding seam 42 cannot improve the overall strength of the outer casing of the single cell. 2 mm≤L20≤6 mm can reduce the energy waste as much as possible while ensuring the connection strength between the first conductive member 10 and the casing 70.

In some possible implementations, the first conductive member 10 includes a first plate 13, a second plate 14, and a third plate 15. The conductive hole 111 is provided in the first plate 13. The first plate 13 is disposed around the third plate 15. The casing 70 is connected to the third plate 15. Two opposite ends of the second plate 14 are respectively connected to the first plate 13 and the third plate 15. The first plate 13 and the second plate 14 are embedded in the opening of the casing 70.

The first plate 13 and the second plate 14 are embedded in the opening of the casing 70, so that the first conductive member 10 and the casing 70 can be positioned without a mold before the third plate 15 and the casing 70 are welded, which serves as a fool-proof structure, and also avoids the risk of the assembly worker installing the first conductive member 10 in reverse.

The first plate 13 and the second plate 14 are connected in an arc.

In a case where an inner edge of the opening of the casing 70 abuts against the arc, there is a tendency to guide the first plate 13 and the second plate 14 into the opening spontaneously, which can guide assembly in addition to positioning, thereby reducing the requirement of the assembly process on the alignment accuracy.

Specifically, a radius of the arc is R2, where 0.1 mm≤R2≤2 mm.

If the radius of the arc is excessively small, an alignment guidance region is small and a guidance effect is weak. If the radius of the arc is excessively large, a connection strength between the first plate 13 and the second plate 14 will be reduced. R2 satisfies: 0.1 mm≤R2≤2 mm, so that a guiding effect as obvious as possible can be obtained while ensuring the structural strength of the first conductive member 10. Specifically, in some implementations, R2 is 0.5 mm or 1 mm.

Specifically, the radius of the arc is R2, and a thickness of the first plate 13 is L21, where 20%≤R2/L21≤100%.

The radius of the arc is also affected by the thickness of the first plate 13. If the radius of the arc is excessively small, the alignment guidance region is small and the guidance effect is weak. If the radius of the arc is excessively large, the connection strength between the first plate 13 and the second plate 14 will be reduced. R2/L21 satisfies: 20%≤R2/L21≤100%, so that the guiding effect as obvious as possible can be obtained while ensuring the structural strength of the first conductive member 10. Specifically, in some implementations, R2/L21 is 50%.

In some possible implementations, an assembly gap 80 exists between the second plate 14 and the casing 70.

The existence of the assembly gap 80 facilitates the embedding of the first plate 13 and the second plate 14, so that the alignment accuracy requirement during the assembly process is reduced.

Specifically, a width of the assembly gap 80 is L22, where 0.1 mm≤L22≤0.5 mm.

The excessively small assembly gap 80 hardly produces significant optimization for the assembly process. However, the excessively large assembly gap 80 affects the airtightness between the first conductive member 10 and the casing 70. As such, 0.1 mm≤L22≤0.5 mm is configured to reduce an alignment precision requirement as much as possible while ensuring the airtightness. Specifically, in some implementations, L22 is 0.4 mm or 0.5 mm.

## Claims

1. A single cell, comprising:
a first conductive member provided with at least one conductive hole, wherein the conductive hole penetrates through the first conductive member in a thickness direction of the first conductive member;
at least one second conductive member passing through the conductive hole, wherein the second conductive member is fixed and electrically connected to the first conductive member; and
a cell assembly welded to the second conductive member.

2. The single cell according to claim 1, wherein the second conductive member is further provided with a welding hole, and an opening direction of the welding hole faces a side of the second conductive member away from the cell assembly.

3. The single cell according to claim 2, wherein a diameter of the conductive hole is D1, and a diameter of the welding hole is D2, where 30%≤D2/D1≤90%.

4. The single cell according to claim 2, wherein a depth of the welding hole is L1, and a projection length of the second conductive member in the thickness direction of the first conductive member is L2, where 50%≤L1/L2 ≤90%.

5. The single cell according to claim 2, wherein a minimum distance between a hole wall of the welding hole and an outer wall of the second conductive member is L3, where L3≥0.05 mm.

6. The single cell according to claim 2, wherein a distance between a bottom of the welding hole and a surface of the second conductive member on a side close to the cell assembly is L4, where 0.05 mm≤L4≤2 mm.

7. The single cell according to claim 1, wherein the cell assembly comprises a cell and a current collecting disk, and the current collecting disk is electrically connected to the cell and the second conductive member, respectively.

8. The single cell according to claim 7, wherein an area of the first conductive member on a side close to the cell assembly is S1, and a projection area of a contact surface between the second conductive member and the current collecting disk on the first conductive member is S2, where 20%≤S2/S1≤90%.

9. The single cell according to claim 7, wherein the second conductive member is connected to the current collecting disk through a first welding seam, a projection area of the first welding seam on a surface of the current collecting disk is S3, and a surface area of the current collecting disk on a side close to the first conductive member structure is S4, where S3/S4≥10%.

10. The single cell according to claim 7, wherein the second conductive member is welded to a side of the current collecting disk close to the first conductive member, and a side of the current collecting disk away from the second conductive member is electrically connected to the cell.

11. The single cell according to claim 7, wherein the second conductive member and the current collecting disk are made of a same material.

12. The single cell according to claim 1, wherein the cell assembly comprises a jelly roll and a tab electrically connected to each other, and the tab is welded to the second conductive member.

13. The single cell according to claim 12, wherein the second conductive member and the tab are made of a same material.

14. The single cell according to claim 1, wherein a plurality of conductive holes are provided, and the second conductive members are arranged in a one-to-one correspondence with the plurality of conductive holes.

15. The single cell according to claim 14, wherein the plurality of conductive holes are provided in the first conductive member in a circumferential array.

16. The single cell according to claim 1, wherein a material of the second conductive member comprises copper.

17. The single cell according to claim 16, wherein the single cell further comprises a first isolation layer, the second conductive member is wrapped by the first isolation layer, and a surface of the second conductive member close to the cell assembly is at least partially exposed.

18. The single cell according to claim 17, wherein a material of the first isolation layer comprises at least one of steel and nickel.

19. The single cell according to claim 17, wherein an area of an exposed portion of the surface of the second conductive member close to the cell assembly is S5, and an area of the first conductive member on a side close to the cell assembly is S1, where 40%≤S5/S1≤100%.

20. The single cell according to claim 1, wherein the second conductive member and the first conductive member are fixed by riveting.

21. The single cell according to claim 20, wherein the first conductive member comprises a first surface and a second surface opposite to each other, and the second conductive member comprises:
a rivet post passing through the conductive hole;
a rivet base connected to one end of the rivet post, wherein the rivet base abuts against the first surface; and
a rivet buckle connected to an end of the rivet post away from the rivet base, wherein the rivet buckle is riveted to the second surface.

22. The single cell according to claim 21, wherein an outer edge of an end of the rivet buckle away from the rivet base is provided with an outer chamfer, and on any cross section passing through an axis of the rivet buckle, an included angle between the outer chamfer and the second surface is A1, where 10°≤A1≤85°.

23. The single cell according to claim 22, wherein a distance between an outer edge of the outer chamfer and the second surface is L5, and a thickness of the rivet buckle is L6, where 0≤L5/L6≤70%.

24. The single cell according to claim 21, wherein a thickness of the rivet buckle is L6, and a projection length of the second conductive member in a thickness direction of the rivet buckle is L7, where 10%≤L6/L7≤40%.

25. The single cell according to claim 21, wherein a diameter of the conductive hole is D1, and an outer diameter of the rivet buckle is D3, where 120%≤D3/D1≤200%.

26. The single cell according to claim 21, wherein a diameter of the rivet base is D4, where 2 mm≤D4 ≤20 mm.

27. The single cell according to claim 21, wherein a diameter of the conductive hole is D1, and a diameter of the rivet base is D4, where 130%≤D4/D1≤200%.

28. The single cell according to claim 21, wherein a thickness of the rivet base is L8, where 0.05 mm≤ L8≤2 mm.

29. The single cell according to claim 21, wherein the single cell further comprises a first isolation sleeve, the rivet post passes through the first isolation sleeve, and the first isolation sleeve is sandwiched between the rivet base and the first surface.

30. The single cell according to claim 29, wherein a diameter of the rivet base is D4, and a diameter of an outer diameter of the first isolation sleeve is D5, where 70%≤D4/D5≤120%.

31. The single cell according to claim 29, wherein a thickness of the first isolation sleeve is L9, where 0.5≤L9≤1.5 mm.

32. The single cell according to any one of claims 20 to 31, wherein the second conductive member is further provided with a riveting hole, and an opening direction of the riveting hole faces a side of the second conductive member away from the cell assembly.

33. The single cell according to claim 32, wherein an edge of the riveting hole is provided with an inner chamfer, and on any cross section passing through an axis of the riveting hole, an included angle between a plane where the inner chamfer is located and the second surface is A2, where 30°≤A2≤85°.

34. The single cell according to claim 32, wherein a diameter of the riveting hole is D6, and a minimum outer diameter of the second conductive member is D7, where 30%≤D6/D7≤80%.

35. The single cell according to claim 1, wherein the single cell further comprises a fastener, the second conductive member comprises a through post and a flange, the through post passes through the conductive hole, and the flange abuts against the first conductive member; and wherein the fastener passes through at least one of the first conductive member and the second conductive member to connect the first conductive member and the second conductive member.

36. The single cell according to claim 35, wherein the flange is provided with a first hole, and the fastener passes through the first hole and is connected to the first conductive member.

37. The single cell according to claim 36, wherein a second isolation layer is provided between the first conductive member and the second conductive member.

38. The single cell according to claim 36, wherein a surface of the fastener in contact with the first conductive member and the second conductive member is provided with a third isolation layer.

39. The single cell according to any one of claims 37 to 38, wherein the second isolation layer or the third isolation layer is a nickel plating layer.

40. The single cell according to any one of claims 37 to 38, wherein the second isolation layer or the third isolation layer is at least one of a polypropylene (PP) film or a polyphenylene sulfide (PPS) film.

41. The single cell according to claim 36, wherein a distance between a surface of the through post on a side close to the cell assembly and a surface of the first conductive member on a side close to the cell assembly is H1, where 0.8≤H1≤2 mm.

42. The single cell according to claim 36, wherein a projection area of an outer edge of the flange on the first conductive member is S6, and a contact area between the flange and the first conductive member is S7, where 5% ≤S7/S6≤35%.

43. The single cell according to claim 36, wherein a plurality of first holes are provided on each of the flanges.

44. The single cell according to claim 43, wherein the plurality of first holes are distributed on each of the flanges in a circumferential array.

45. The single cell according to claim 36, wherein the flange abuts against a surface of the first conductive member away from the cell assembly.

46. The single cell according to claim 36, wherein a diameter of the first hole is D8, where 2.5 mm≤D8 ≤16 mm.

47. The single cell according to claim 36, wherein the first conductive member is provided with a second hole, and the fastener passes through the first hole and is inserted into the second hole.

48. The single cell according to claim 47, wherein the fastener is a screw, and the fastener is in threaded fit with the second hole.

49. The single cell according to claim 35, wherein the first conductive member is provided with a third hole, and the fastener passes through the third hole and is connected to the second conductive member.

50. The single cell according to any one of claims 36 to 49, wherein the fastener comprises a first portion and a second portion connected to each other, and the first portion passes through the first hole or the third hole; and wherein the second portion abuts against a surface of the second conductive member away from the first conductive member, or the second portion abuts against a surface of the first conductive member away from the second conductive member.

51. The single cell according to claim 50, wherein a diameter of the first portion is D9, where 2.5 mm≤ D9≤16 mm.

52. The single cell according to claim 50, wherein a thickness of the second portion is L10, where 0.5 mm≤L10≤2 mm.

53. The single cell according to any one of claims 35 to 52, wherein the single cell further comprises a second isolation sleeve, the second isolation sleeve is sleeved on the through post, and the second isolation sleeve is at least partially sandwiched between the first conductive member and the second conductive member.

54. The single cell according to claim 53, wherein the first conductive member comprises a plate body and a boss, the conductive hole is provided in the plate body, the boss is disposed protruding from an inner wall of the conductive hole, and the second isolation sleeve is sandwiched between the boss and the flange.

55. The single cell according to claim 54, wherein a height of the boss is H2, where 0.5 mm<H2≤5 mm.

56. The single cell according to claim 54, wherein a height of the boss is H2, and a thickness of the first conductive member is L11, where 20%≤H2/L11≤50%.

57. The single cell according to claim 54, wherein a height of the boss is H2, a thickness of the first conductive member is L11, and a natural length of the second isolation sleeve is L12, where H2+L12>L11.

58. The single cell according to claim 53, wherein the second isolation sleeve comprises a ring sleeve portion and a gasket portion, the ring sleeve portion is at least partially inserted into the conductive hole, and the gasket portion is at least partially sandwiched between the flange and the first conductive member.

59. The single cell according to claim 58, wherein an outer diameter of the gasket portion is D10, and an outer diameter of the flange is D11, where 70%≤D11/D10≤120%.

60. The single cell according to claim 58, wherein a thickness of the gasket portion is L13, where 0.5≤ L13≤1.5 mm.

61. The single cell according to claim 1, wherein the second conductive member passes through the conductive hole and is snap-fitted with the first conductive member.

62. The single cell according to claim 61, wherein the first conductive member comprises a first surface and a second surface opposite to each other, and the second conductive member comprises:
a connecting rod passing through the conductive hole;
a base connected to one end of the connecting rod, wherein the base abuts against the second surface;
a snap connected to one end of the connecting rod away from the base, wherein the snap is snap-fitted with the first surface.

63. The single cell according to claim 62, wherein an outer diameter of the base is D12, where 2 mm≤ D12≤20 mm.

64. The single cell according to claim 62, wherein a diameter of the conductive hole is D1, and an outer diameter of the base is D12, where 130%≤D12/D1≤200%.

65. The single cell according to claim 62, wherein a thickness of the base is L14, where 0.2 mm≤L14≤ 2 mm.

66. The single cell according to claim 62, wherein an outer diameter of the snap decreases away from the base.

67. The single cell according to claim 66, wherein a diameter of the conductive hole is D1, and a maximum outer diameter of the snap is D13, where 102%≤D13/D1≤150%.

68. The single cell according to claim 66, wherein a diameter of the conductive hole is D1, and a minimum outer diameter of the snap is D14, where 60%≤D14/D1≤97%.

69. The single cell according to claim 66, wherein on any cross section passing through the axis of the snap, and an included angle between a tangent line of an outer contour of the snap and the first surface is A3, where 60%≤A3≤85%.

70. The single cell according to any one of claims 62 to 69, wherein the single cell further comprises a second isolation sleeve, the second isolation sleeve is sleeved on the through post, and the second isolation sleeve is at least partially sandwiched between the first conductive member and the second conductive member.

71. The single cell according to claim 70, wherein the first conductive member comprises a plate body and a boss, the conductive hole is provided in the plate body, the boss is disposed protruding from an inner wall of the conductive hole, and the second isolation sleeve is sandwiched between the boss and the base.

72. The single cell according to claim 71, wherein a height of the boss is H2, where 1 mm≤H2≤5 mm.

73. The single cell according to claim 71, wherein a height of the boss is H2, and a thickness of the first conductive member is L11, where 40%≤H2/L11≤60%.

74. The single cell according to claim 71, wherein a height of the boss is H2, a thickness of the first conductive member is L11, and a natural length of the second isolation sleeve is L12, where H2+L12≥L11.

75. The single cell according to claim 70, wherein the second isolation sleeve comprises a ring sleeve portion and a gasket portion, the ring sleeve portion is at least partially inserted into the conductive hole, and the gasket portion is at least partially sandwiched by the base and the first conductive member.

76. The single cell according to claim 75, wherein an outer diameter of the gasket portion is D10, and an outer diameter of the base is D12, where 70%≤D12/D10≤120%.

77. The single cell according to claim 75, wherein a thickness of the gasket portion is L13, where 0.5≤ L13≤1.5 mm.

78. The single cell according to any one of claims 1 to 77, wherein the first conductive member is further formed with a pressure relief groove, and the pressure relief groove avoids the conductive hole and is recessed on a surface of the first conductive member.

79. The single cell according to claim 78, wherein a distance between an edge of the pressure relief groove and an edge of the conductive hole is L15, where 2 mm<L15<35 mm.

80. The single cell according to claim 78, wherein a maximum width of the pressure relief groove is L16, where 0.05 mm≤L16≤5 mm.

81. The single cell according to claim 78, wherein the first conductive member comprises a first surface and a second surface opposite to each other, the first surface is configured to face the cell assembly, and the pressure relief groove is provided on the second surface.

82. The single cell according to claim 81, wherein a distance between a bottom of the pressure relief groove and the first surface is L17, where 0.02 mm≤L17≤1.5 mm.

83. The single cell according to claim 78, wherein an included angle between two opposite groove walls of the pressure relief groove is A4, where 20°≤A4≤90°.

84. The single cell according to claim 78, wherein a cross section of the pressure relief groove in a direction perpendicular to an extension direction of the pressure relief groove is a trapezoid, and a lower bottom of the trapezoid is located on the surface of the first conductive member.

85. The single cell according to claim 84, wherein a length of an upper bottom of the trapezoid is L18, where 0.02 mm≤L18≤3 mm.

86. The single cell according to claim 78, wherein a bottom of the pressure relief groove is provided with a rounded corner.

87. The single cell according to claim 86, wherein a radius of the rounded corner is R1, and a maximum width of the pressure relief groove is L16, where 20%≤R1/L16≤100%.

88. The single cell according to any one of claims 1 to 77, wherein the single cell further comprises a fourth isolation layer, and the fourth isolation layer covers a surface of the first conductive member on a side facing the cell assembly.

89. The single cell according to claim 88, wherein the fourth isolation layer is one of a nickel plating layer or an iron alloy plating layer.

90. The single cell according to claim 88, wherein the fourth isolation layer is one of a polypropylene (PP) film or a polyphenylene sulfide (PPS) film.

91. The single cell according to claim 88, wherein an area of the first conductive member on a side close to the cell assembly is S1, and a projection area of the fourth isolation layer on a surface of the first conductive member is S8, where 5%≤S8/S1≤97%.

92. The single cell according to claim 88, wherein a thickness of the fourth isolation layer is L19, where 0.05 mm≤L19≤2 mm.

93. The single cell according to claim 88, wherein a thickness of the fourth isolation layer is uniformly distributed on an entire surface of the first conductive member.

94. The single cell according to claim 88, wherein a thickness of the fourth isolation layer increases as the fourth isolation layer approaches the conductive hole.

95. The single cell according to any one of claims 1 to 77, wherein a thickness of the first conductive member is L11, where 0.5 mm≤L11≤2 mm.

96. The single cell according to any one of claims 1 to 77, wherein the single cell further comprises a casing, an opening is provided on one side of the casing, the first conductive member blocks the opening of the casing and encloses with the casing to form an accommodating space, and the cell assembly is disposed in the accommodating space.

97. The single cell according to claim 96, wherein the single cell further comprises a second welding seam, and the first conductive member and the casing are connected through the second welding seam.

98. The single cell according to claim 97, wherein a height of the second welding seam protruding from a surface of the casing is H3, where 0 mm≤H3≤3 mm.

99. The single cell according to claim 97, wherein a width of the second welding seam is L20, where 2 mm≤L20≤6 mm.

100. The single cell according to claim 96, wherein the first conductive member comprises a first plate, a second plate, and a third plate, the conductive hole is provided in the first plate, the third plate is disposed around the first plate, and the casing is connected to the third plate; and wherein two opposite ends of the second plate are respectively connected to the first plate and the third plate, and the first plate and the second plate are embedded in the opening of the casing.

101. The single cell according to claim 100, wherein the first plate and the second plate are connected by an arc.

102. The single cell according to claim 101, wherein a radius of the arc is R2, where 0.1 mm≤R2≤2 mm.

103. The single cell according to claim 101, wherein a radius of the arc is R2, and a thickness of the first plate is L21, where 20%≤R2/L21≤100%.

104. The single cell according to claim 100, wherein an assembly gap is provided between the second plate and the casing.

105. The single cell according to claim 104, wherein a width of the assembly gap is L22, where 0.1 mm ≤L22≤0.5 mm.
